(19) Europäisches Patentamt / European Patent Office / Office européen des brevets

(11) **EP 4 319 409 A1**

(12) **EUROPEAN PATENT APPLICATION**
published in accordance with Art. 153(4) EPC

(43) Date of publication:
**07.02.2024 Bulletin 2024/06**

(21) Application number: **22781696.4**

(22) Date of filing: **01.04.2022**

(51) International Patent Classification (IPC):
**H04W 72/04** (2023.01)  **H04L 1/18** (2023.01)
**H04W 84/06** (2009.01)  **H04B 7/185** (2006.01)

(52) Cooperative Patent Classification (CPC):
**H04B 7/185; H04L 1/18; H04W 72/04; H04W 84/06**

(86) International application number:
**PCT/KR2022/004717**

(87) International publication number:
**WO 2022/211577 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.04.2021 KR 20210043489**

(71) Applicant: **LG Electronics Inc.**
**Yeongdeungpo-gu**
**Seoul 07336 (KR)**

(72) Inventors:
• **PARK, Haewook**
**Seoul 06772 (KR)**
• **YANG, Suckchel**
**Seoul 06772 (KR)**
• **KIM, Seonwook**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR DOWNLINK-UPLINK TRANSMISSION/RECEPTION IN WIRELESS COMMUNICATION SYSTEM**

(57) Disclosed are a method and a device for applying a time offset between downlink reception (or downlink transmission) and uplink transmission (or uplink reception) in a wireless communication system. A method for performing uplink transmission by a terminal in a wireless communication system according to an embodiment of the present disclosure may comprise the steps of: receiving a timing offset related to uplink transmission, from a base station via system information; receiving a downlink channel from the base station in a first time unit; and transmitting an uplink channel to the base station in a second time unit. The number of time units between the first time unit and the second time unit may be based on a first time offset or a second time offset. The first time offset may be based on base offset information and additional offset information, and the second time offset may be based on the base offset information. The base offset information may be obtained via downlink control information (DCI) related to the downlink channel. A size of a field indicating the base offset in the DCI may be the same for the first time offset and the second time offset.

FIG. 14

Receive NTN-related system information — S1410

Receive downlink channel in first time unit — S1420

Transmit uplink channel in second time unit determined based on first time offset or second time offset from first time unit — S1430

**Description**

[Technical Field]

The present disclosure relates to a wireless communication system, and in more detail, relates to a method and a device of applying a time offset between downlink reception (or transmission) and uplink transmission (or reception) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical problem of the present disclosure is to provide a method and a device of applying a time offset between downlink reception (or transmission) and uplink transmission (or reception) in a wireless communication system.

An additional technical problem of the present disclosure is to provide a method and a device of defining/signaling/applying a time offset to uplink transmission (or reception) based on downlink reception (or transmission) in a wireless communication system including a non-terrestrial network (NTN).

The technical objects to be achieved by the present disclosure are not limited to the above-described technical objects, and other technical objects which are not described herein will be clearly understood by those skilled in the pertinent art from the following description.

[Technical Solution]

A method of performing uplink transmission by a terminal in a wireless communication system according to an aspect of the present disclosure may include receiving a timing offset related to uplink transmission from a base station through system information; receiving a downlink channel from the base station in a first time unit; and transmitting an uplink channel to the base station in a second time unit. The number of time units between the first time unit and the second time unit may be based on a first time offset or a second time offset. The first time offset may be based on base offset information and additional offset information and the second time offset may be based on base offset information. The base offset information may be acquired through downlink control information (DCI) related to the downlink channel. A size of a field indicating the base offset in the DCI may be the same for the first time offset and the second time offset.

A method of receiving uplink transmission by a base station in a wireless communication system according to an additional aspect of the present disclosure may include transmitting a timing offset related to uplink transmission to at least one terminal through system information; transmitting a downlink channel to a terminal in a first time unit; and receiving an uplink channel from the terminal in a second time unit. The number of time units between the first time unit and the second time unit may be based on a first time offset or a second time offset. The first time offset may be based on base offset information and additional offset information and the second time offset may be based on base offset information. The base offset information may be acquired through downlink control information (DCI) related to the downlink channel. A size of a field indicating the base offset in the DCI may be the same for the first time offset and the second time offset.

[Technical Effects]

According to the present disclosure, a method and a device of applying a time offset between downlink reception (or transmission) and uplink transmission (or reception) in a wireless communication system may be provided.

According to the present disclosure, a method and a device of defining/signaling/applying a time offset to uplink transmission (or reception) based on downlink reception (or transmission) in a wireless communication system including a non-terrestrial network (NTN) may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram for describing examples of a scheduling offset to which the present disclosure may be applied.

FIG. 8 is a diagram for describing a NTN supported by a wireless communication system to which the present disclosure may be applied.

FIG. 9 is a diagram for describing a TA in a NTN supported by a wireless communication system to which the present disclosure may be applied.

FIG. 10 is a diagram for describing a timing-related operation of a NTN service support system to which the present disclosure may be applied.

FIG. 11 is a diagram for describing a $K_{offset}$-related timing in a NTN operation to which the present disclosure may be applied.

FIG. 12 is a diagram for describing a $k_{mac}$-related timing in a NTN operation to which the present disclosure may be applied.

FIG. 13 is a diagram for describing a timing advance in a NTN operation to which the present disclosure may be applied.

FIG. 14 is a diagram for describing an exemplary method of applying an additional time offset between DL reception and LTL transmission of a terminal in a NTN according to an example of the present disclosure.

FIG. 15 is a diagram for describing a method in which a base station supports an additional time offset applied between DL transmission and LTL reception in a NTN according to an example of the present disclosure.

FIG. 16 is a diagram for describing a signaling process according to an embodiment of the present disclosure.

FIG. 17 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (LTL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management

CQI: Channel Quality Indicator

CRI: channel state information - reference signal resource indicator

CSI: channel state information

CSI-IM: channel state information - interference measurement

CSI-RS: channel state information - reference signal

DMRS: demodulation reference signal

FDM: frequency division multiplexing

FFT: fast Fourier transform

IFDMA: interleaved frequency division multiple access

IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

<u>Overall System</u>

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

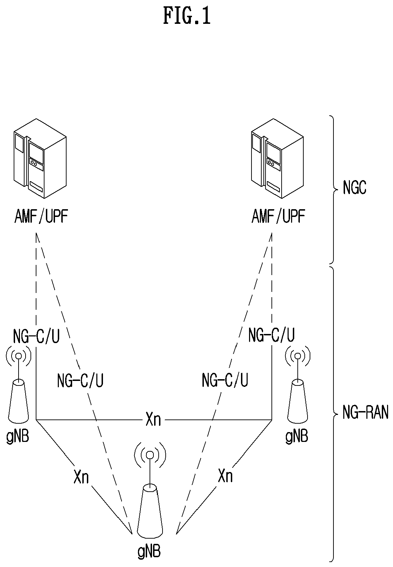

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

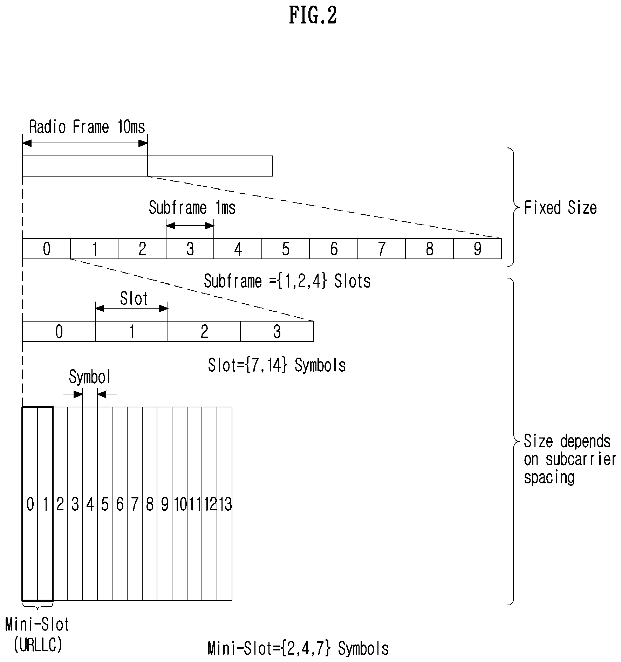

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $Tf = 1/(\Delta f_{max} N_f/100) \cdot T_c = 10$ms. Here, a radio frame is configured with 10 subframes having a duration of $T_{sf} = (\Delta f_{max} N_f/1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |

(continued)

| $\mu$ | $N_{symb}^{slot}$ | $N_{slot}^{frame,\mu}$ | $N_{slot}^{subframe,\mu}$ |
|---|---|---|---|
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

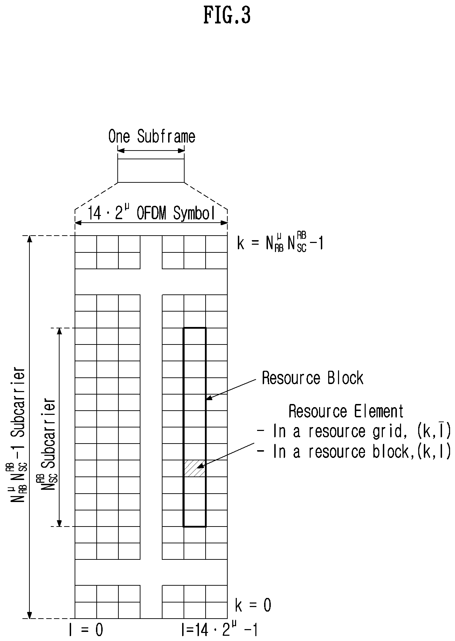

FIG. 2 is an example on $\mu$=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}\leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $1'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

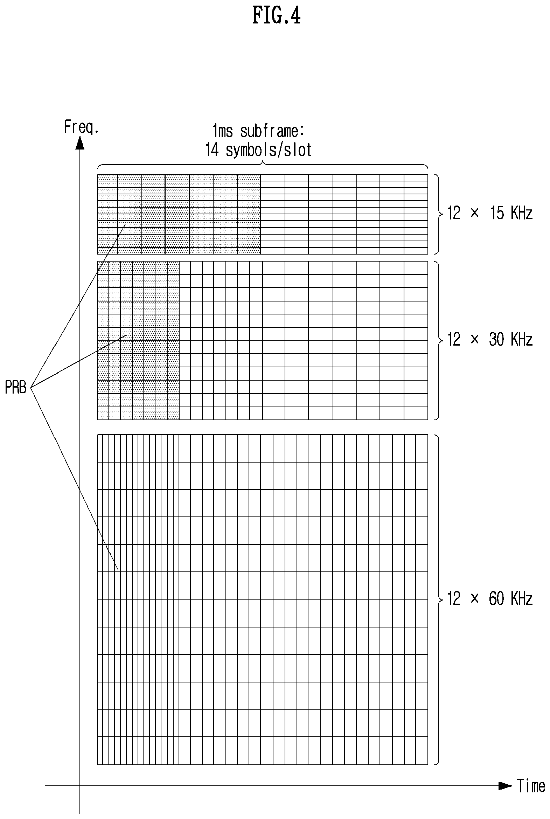

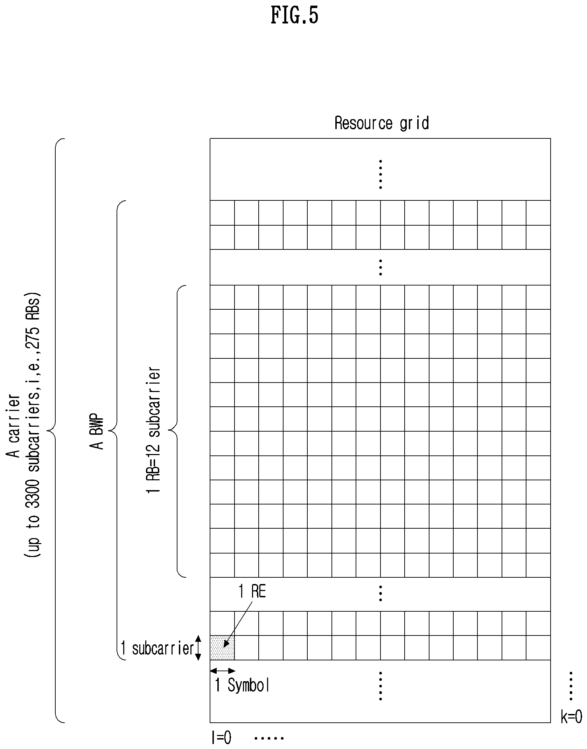

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/LTL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/LTL BWP. Here, an activated DL/LTL BWP is defined as an active DL/LTL BWP. But, a configuration on a DL/UL BWP may not be received when a terminal performs an initial access procedure or before a RRC connection is set up, so a DL/UL BWP which is assumed by a terminal under these situations is defined as an initial active DL/LTL BWP.

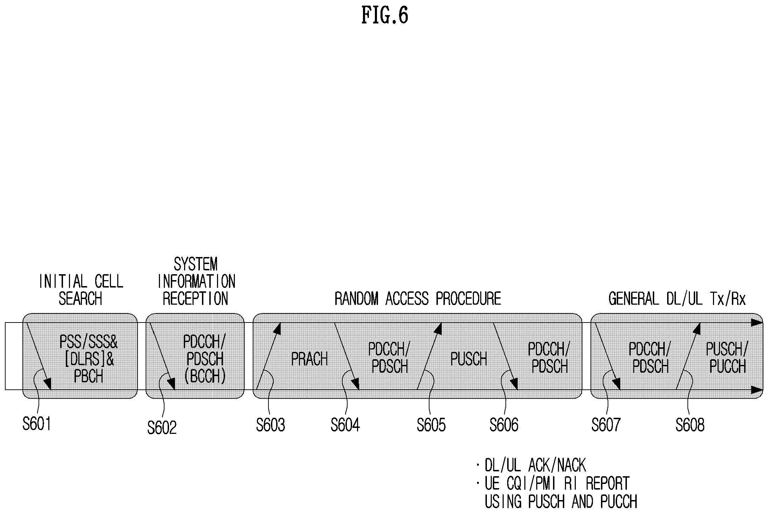

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a LTE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation and Coding Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

HARQ Operation-related Timing

Hereinafter, a HARQ operation which may be applied to a NR system is described. A DL HARQ operation may include DL data transmission on a PDSCH and response to HARQ ACK/NACK information (hereinafter, HARQ-ACK) through a PUCCH/a PUSCH. A UL HARQ operation may include UL data transmission on a PUSCH and response to HARQ-ACK through a PDCCH.

A least one HARQ process may exist in a base station/a terminal for DL/UL transmission. For example, a plurality of parallel HARQ processes may allow DL/UL transmission to be continuously performed while waiting for a HARQ feedback for successful or non-successful reception of previous DL/UL transmission.

Each HARQ process may be associated with a HARQ buffer of a MAC layer. Each HARQ process may manage the number of transmissions of a MAC protocol data block (PDU) in a buffer, a HARQ feedback for a MAC PDU in a buffer, a redundancy version (RV), etc.

For example, each of 8 HARQ processes may have an ID of 0 to 7. In a synchronous HARQ method, a HARQ process ID may be sequentially connected to a time unit (TU). In an asynchronous HARQ method, a HARQ process ID may be designated by a network (e.g., a base station) at the time of data scheduling. Here, a TU may be replaced with a data transmission occasion (e.g., a subframe, a slot, etc.).

Among HARQ transmission methods, an asynchronous HARQ method may mean that there is no fixed time pattern for each HARQ process. In other words, since a HARQ retransmission time is not predefined, a base station may transmit a retransmission request message to a terminal.

Among HARQ transmission methods, a synchronous HARQ method may have a fixed time pattern for each HARQ process. In other words, a HARQ retransmission time may be predefined. Accordingly, a UL grant message transmitted from a base station to a terminal is transmitted only initially and subsequent retransmission may be performed by an ACK/NACK signal.

For a non-adaptive HARQ method among HARQ transmission methods, a frequency resource or a MCS for retransmission may be the same as previous transmission. For an adaptive HARQ method, a frequency resource or a MCS for retransmission may be different from previous transmission. In an example, for an asynchronous adaptive HARQ method, since a frequency resource or a MCS for retransmission is different at every transmission time point, a retransmission request message may include a terminal ID, RB allocation information, a HARQ process ID/number, a RV, and NDI information.

A HARQ in a NR may have two features.

A first feature is to support 1-bit HARQ-ACK per transport block (TB). Here, an operation of one DL HARQ process is supported for some UEs, while an operation of at least one DL HARQ process is supported for given UE.

A second feature is that UE may support a set of minimum HARQ processing times. Here, the minimum HARQ processing time means the minimum time required by a terminal from DL data reception from a base station to a HARQ-ACK transmission timing corresponding thereto. In this regard, a variety of terminal processing times (e.g., N1, K1, etc.) may be defined according to symbol granularity and slot granularity.

First, from a terminal point of view, N1 may correspond to the number of OFDM symbols required for terminal processing from the last of PDSCH reception to the earliest possible start of HARQ-ACK transmission corresponding thereto. A value of N1 may be predefined according to an OFDM numerology (e.g., subcarrier spacing (SCS)) and a DMRS pattern and a PDSCH processing capability of a terminal. A DMRS pattern may have a front-loaded DMRS and a front-loaded and additional DMRS. PDSCH processing capability 1 of a terminal is supported by all terminals in a mandatory way and PDSCH processing capability 2 is a capability which may be supported by a high-performance terminal supporting a low latency requirement.

For PDSCH processing capability 1, for a front-loaded DMRS configuration, a N1 value of 8, 10, 17 and 20 symbols may be defined for 15, 30, 60, and 120 kHz SCS, respectively.

For PDSCH processing capability 1, for a front-loaded and additional DMRS configuration, a N1 value of 13, 13, 20 and 24 symbols may be defined for 15, 30, 60 and 120 kHz SCS, respectively.

For PDSCH processing capability 2, for a front-loaded DMRS configuration, a N1 value of 3, 4.5 and 9 symbols may be defined for 15, 30 and 60 kHz SCS, respectively. Here, 9 symbols, a N1 value for 60 kHz SCS, may be applied to frequency range 1 (FR1).

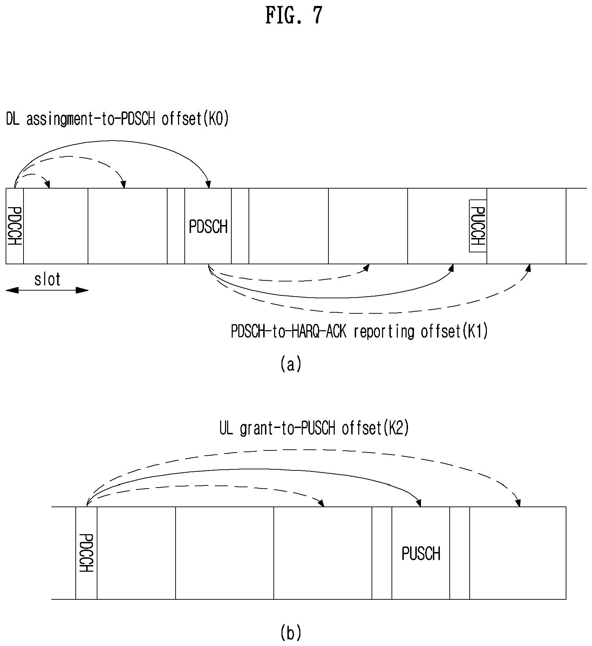

FIG. 7 is a diagram for describing examples of a scheduling offset to which the present disclosure may be applied.

In an example of FIG. 7, K0 corresponds to the number of slots from a slot including a DL allocation PDCCH/DCI to a slot including a PDSCH corresponding thereto (i.e., scheduled by a DL allocation PDCCH/DCI).

K1 corresponds to the number of slots from a slot including a PDSCH to a slot including a PUCCH/a PUSCH corresponding thereto (i.e., including uplink control information (UCI) including HARQ-ACK indicating whether decoding of a received PDSCH is successful).

K2 corresponds to the number of slots from a slot including a LTL grant PDCCH/DCI to a slot including a PUSCH corresponding thereto (i.e., scheduled by a UL grant PDCCH/DCI).

In short, K0, K1, and K2 may correspond to a time offset or a scheduling offset from a slot including A to a slot including B. For K0, A is DL scheduling DCI and B is corresponding DL data. For K1, A is DL data and B is corresponding HARQ-ACK. For K2, A is UL scheduling DCI and B is corresponding LTL data.

A slot timing between A and B may be indicated by a predetermined field in DCI among a set of predetermined values. A set of predetermined values may be configured for a terminal by higher layer signaling (e.g., RRC signaling and/or a MAC control element (CE)). A codepoint indicated by a predetermined field in DCI may indicate at least one of a set of predetermined values configured by higher layer signaling.

In addition, a different minimum HARQ processing time between terminals may be supported in a NR system. A HARQ processing time may include a delay between a DL data reception timing and a corresponding HARQ-ACK transmission timing and a delay between a UL grant reception timing and a corresponding UL data transmission timing. A terminal may transmit capability information of its minimum HARQ processing time to a base station. An asynchronous and adaptive DL HARQ may be supported at least in an enhanced mobile broadband (eMBB) and an ultra-reliable low latency (URLC).

From a terminal point of view, a HARQ ACK/NACK feedback for multiple DL transmissions in a time domain may be transmitted in one LTL data/control region. A timing between DL data reception and corresponding HARQ-ACK is indicated by a field in DCI among a set of predetermined values and a set of the values may be configured by a higher layer. The timing is defined at least when the timing is not known to a terminal.

In reference to FIG. 7(a), a terminal may detect a PDCCH in slot #n. Here, a PDCCH may include DL scheduling information (e.g., DCI format 1_0, 1_1, etc.). 'DL assignment-to-PDSCH offset (K0)' and 'PDSCH-HARQ-ACK reporting offset (K1)' may be indicated through a corresponding PDCCH.

For example, each of K0 and K1 may be indicated by a 'time domain resource assignment (TDRA) field' and a 'PDSCH-to-HARQ feedback timing indicator field' of DCI format 1_0/1_1.

Specifically, a 'TDRA field' may indicate a start position (e.g., an OFDM symbol index) and a length (e.g., the number of OFDM symbols) of a PDSCH in a slot. A 'PDSCH-to-HARQ feedback timing indicator field' may indicate a position where HARQ-ACK reporting starts after a PDSCH is received.

In addition, DCI format 1_0/1_1 may include a 'PUCCH resource indicator (PRI) field' indicating a PUCCH resource which will be used for UCI transmission among a plurality of PUCCH resources included in a PUCCH resource set.

A PDSCH may be received in slot #k and HARQ-ACK information corresponding to a PDSCH may be transmitted in slot #k+K1. For example, after receiving a PDSCH from a base station in slot #n+K0 according to scheduling information of slot #n, a terminal may transmit UCI to a base station through a PUCCH in slot #n+K0+K1.

Here, UCI may include a HARQ-ACK feedback for a PDSCH. When a PDSCH is configured to transmit up to 1 TB, a HARQ-ACK feedback may be configured with 1-bit. When a PDSCH is configured to transmit up to two TBs, a HARQ-ACK feedback may be configured with 2-bits if spatial bundling is not configured and may be configured with 1-bit if spatial bundling is configured. When a HARQ-ACK transmission time point for a plurality of PDSCHs is designated as slot #k+K1, UCI transmitted in slot #k+K1 may include a HARQ-ACK response to a plurality of PDSCHs.

In reference to FIG. 7(b), a terminal may detect a PDCCH in slot #n. Here, a PDCCH may include uplink scheduling information (e.g., DCI format 0_0, 0_1, etc.).

DCI format 0_0/0_1 may include a frequency domain resource assignment (FDRA) field representing a set of RBs allocated to a PUSCH and a time domain resource assignment (TDRA) field indicating a slot offset (K2) and a start position (e.g., an OFDM symbol index) and a length (e.g., the number of OFDM symbols) of a PUSCH in a slot. Here, a start position and a length of a PUSCH may be indicated together or indicated individually through a start and length indicator value (SLIV).

A terminal may transmit a PUSCH to a base station in slot #n+K2 according to scheduling information of slot #n. Here, a PUSCH may include a UL-SCH TB. When a PUCCH transmission time point and a PUSCH transmission time point are overlapped, UCI may be transmitted through a PUSCH (e.g., piggybacked to a PUSCH).

Wireless Communication system supporting Non-terrestrial Network (NTN)

A NTN refers to a segment of a network or a network configured to use a radio resource (RF resource) in an unmanned aircraft system (UAS) platform or a satellite. In order to secure a wider coverage or provide a wireless communication service in a place where it is not easy to install a wireless communication base station, use of a NTN service is considered.

Here, a NTN service refers to providing a wireless communication service to terminals by installing a base station on an artificial satellite (e.g., a geostationary-orbit, low-orbit, medium-orbit satellite, etc.), an airplane, an unmanned airship, a drone, etc., not on the ground. In the following description, a NTN service may include a NR NTN service and/or a LTE NTN service. A terrestrial network (TN) service refers to providing a wireless communication service to terminals by installing a base station on the ground.

A frequency band considered for a NTN service may be mainly a 2 GHz band (S-band:2-4 GHz) in a first frequency range (frequency range 1, FR1) (e.g., 410MHz to 7.125GHz) and a downlink 20 GHz, uplink 30 GHz band (Ka-Band:26.5~40GHz)) in a second frequency range (frequency range 2, FR2) (e.g., 24.25GHz to 52.6GHz). Additionally, a NTN service may be also supported in a frequency band between 7.125GHz and 24.25GHz or in a frequency band equal to or greater than 52.6GHz.

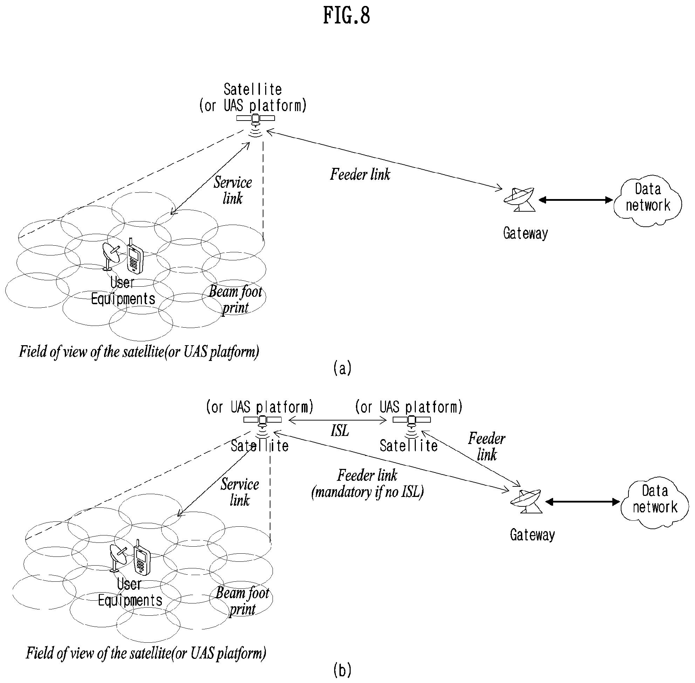

FIG. 8 is a diagram for describing a NTN supported by a wireless communication system to which the present disclosure may be applied.

FIG. 8(a) illustrates a NTN scenario based on a transparent payload and FIG. 8(b) illustrates a NTN scenario based on a regenerative payload.

Here, a NTN scenario based on a transparent payload is a scenario that an artificial satellite receiving a payload from a base station on the ground transmits a corresponding payload to a terminal and a NTN scenario based on a regenerative payload refers to a scenario that an artificial satellite is implemented as a base station (gNB).

A NTN is generally characterized by the following elements.

- At least one sat-gateway for connecting a NTN to a common data network:
  A geostationary earth orbiting (GEO) satellite is supplied by at least one sat-gateway arranged in a coverage targeted by a satellite (e.g., a regional or continental coverage). It may be assumed that a terminal in a cell is served by only one sat-gateway.

A non-GEO satellite may be successively served by at least one sat-gateway. In this case, a wireless communication system guarantees service and feeder link continuity between serving sat-gateways during a time duration enough to perform mobility anchoring and handover.

- Feeder link or radio link between a sat-gateway and a satellite (or a UAS platform)
- Service link or radio link between a terminal and a satellite (or a UAS platform)
- Satellite (or UAS platform) which may implement one of a transparent or regenerative payload (including on-board processing)

Satellite (or UAS platform) generation beams generally generate a plurality of beams in a service region where a boundary is designated by a view of a satellite (or a UAS platform). A footprint of a beam is generally elliptical. A view of a satellite (or a UAS platform) is determined by an on-board antenna diagram and a minimum altitude angle.

Transparent payload: Radio frequency filtering, frequency conversion and amplification. Accordingly, a waveform signal repeated by a payload is not changed.

Regenerative payload: Demodulation/decoding, switching and/or routing, coding/modulation as well as radio frequency filtering, frequency conversion and amplification. It is substantially the same as having all or part of base station functions (e.g., gNB) in a satellite (or a UAS platform).

- For a satellite group, ISL (Inter-satellite links). For it, a regenerative payload is required for a satellite. ISLs may operate in a RF frequency or a broadband.
- A terminal is serviced by a satellite (or a UAS platform) in a target service region.

Table 6 illustrates types of a satellite (or a UAS platform).

[Table 6]

| Platform | Altitudinal Range | Orbit | General Beam Footprint Size |
|---|---|---|---|
| Low-earth Orbiting Satellite | 300-1500km | Circular around the Earth | 100- 1000 km |
| Medium-earth Orbiting Satellite | 7000-25000km | | 100 - 1000 km |
| Geostationary Earth Orbiting Satellite | 35,786km | Notional Station which maintains a fixed position at an altitude/azimuth for a given earth point | 200 - 3500 km |
| UAS Platform (including HAPS) | 8-50km (20 km for HAPS) | | 5 - 200 km |
| High Elliptical Orbiting Satellite | 400-50000km | Elliptical around the Earth | 200 - 3500 km |

Generally, a GEO satellite and a UAS are used to provide a continental, regional or local service. And, a constellation of LEO (low earth orbiting) and MEO (medium earth orbiting) is used to provide a service in both the northern hemisphere and the southern hemisphere. Alternatively, a corresponding constellation may provide a global coverage including a polar region. Subsequently, a proper orbital inclination, a generated sufficient beam and an inter-satellite link may be required. And, a HEO (Highly Elliptical Orbiting) satellite system may be also considered.

Hereinafter, a wireless communication system in a NTN including the following 6 reference scenarios is described.

- Circular orbit and notational station keeping up platform
- Highest RTD (Round Trip Delay) constraint
- Highest Doppler Constraint
- Transparent or regenerative payload
- 1 ISL Case and 1 Case without a ISL For an inter-satellite link, regenerative payload

The following 6 reference scenarios are considered in Table 7 and Table 8.

[Table 7]

| | Transparent Satellite | Regenerative Satellite |
|---|---|---|
| GEO-based Non-terrestrial Access Network | Scenario A | Scenario B |
| LEO-based Non-terrestrial Access Network: Steerable Beams | Scenario C1 | Scenario D1 |
| LEO-based Non-terrestrial Access Network: Corresponding beams move with a satellite. | Scenario C2 | Scenario D2 |

[Table 8]

| Scenario | GEO-based Non-terrestrial Access Network (Scenario A and B) | LEO-based Non-terrestrial Access Network (Scenario C and D) |
|---|---|---|
| Orbit Type | Notional Station which maintains a fixed position at an altitude/azimuth for a given earth point | Circular around the Earth |
| Altitude | 35,786km | 600km, 1,200km |
| Spectrum (Service Link) | In FR1 (e.g., 2 GHz) In FR2 (e.g., DL 20 GHz, UL 30 GHz) | |
| Maximum Channel Bandwidth Capability (Service Link) | In FR1, 30 MHz In FR2, 1 GHz | |

(continued)

| | Scenario A: Transparent (including only a radio frequency function) Scenario B: Regenerative (including all or part of RAN functions) | Scenario C: Transparent (including only a radio frequency function) Scenario D: Regenerative (including all or part of RAN functions) |
|---|---|---|
| Payload | | |
| Inter-satellite Link | No | Scenario C: No Scenario D: Yes/No (Both two cases are available) |
| Earth-fixed Beam | Yes | Scenario C1: Yes (Steerable Beams) (Reference 1), Scenario C2: No (Corresponding beams move with a satellite) Scenario D1: Yes (Steerable Beams) (Reference 1), Scenario D2: No (Corresponding beams move with a satellite) |
| Maximum Beam Footprint Size (edge-to-edge) irrelevant to Elevation Angle | 3500km (Reference 5) | 1000km |
| Minimum Elevation Angle for both Sat-Gateway and Terminal | 10° for Service Link 10° for Feeder Link | 10° for Service Link 10° for Feeder Link |
| Maximum Distance between Satellite and Terminal at Minimum Elevation Angle | 40581km | 1,932 km (Altitude of 600km) 3,131 km (Altitude of 1,200km) |
| Maximum Round Trip Delay (only Propagation Delay) | Scenario A: 541.46 ms (Service and Feeder Link) Scenario B: 270.73 ms (only Service Link) | Scenario C: (Transparent Payload: Service and Feeder Link) - 25.77 ms (600km) - 41.77 ms (1200km) Scenario D: (Regenerative Payload: Only Service Link) - 12.89 ms (600km) - 20.89 ms (1200km) |
| Maximum Differential Delay in Cell (Reference 6) | 10.3ms | For each of 600km and 1200km, 3.12 ms and 3.18 ms |
| Maximum Doppler Shift (Earth-fixed Terminal) | 0.93ppm | 24 ppm (600km)21 ppm (1200km) |
| Maximum Doppler Shift Variation (Earth-fixed Terminal) | 0.000 045ppm/s | 0.27ppm/s (600km)0.13ppm/s (1200km) |
| Movement of Terminal on the Earth | 1200km/h (e.g., Aircraft) | 500km/h (e.g., High-speed Train), Possible 1200km/h (e.g., Aircraft) |
| Terminal Antenna Type | Omnidirectional Antenna (Linear Polarization), Assumed to be 0dBi Directional Antenna (Aperture Diameter of up to 60cm in Circular Polarization) | |
| Terminal Transmission (Tx) Power | Omnidirectional Antenna LTE Power Class 3 Directional Antenna of up to 200mW: Up to 20W | |
| Terminal Noise Level | Omnidirectional Antenna: 7dB Directional Antenna: 1.2dB | |
| Service Link | Link defined in 3GPP | |
| Feeder Link | Radio Interface defined in 3GPP or non-3GPP | Radio Interface defined in 3GPP or non-3GPP |

Reference 1: Each satellite may use a beamforming technology to steer a beam to a fixed point on earth. It is applied for a time corresponding to a visibility time of a satellite. Reference 2: The maximum delay variation in a beam (a terminal fixed on earth (or on the ground)) is calculated based on the minimum elevation angle for both a gateway and a terminal.

Reference 3: The maximum differential delay in a beam is calculated based on a diameter of the maximum beam reception scope at nadir.

Reference 4: Speed of light used for delay calculation is 299792458 m/s.

Reference 5: A size of the maximum beam reception scope of GEO is determined based on a GEO high throughput system technology of a current state by assuming that there is a spot beam at a coverage edge (low altitude).

Reference 6: The maximum differential delay at a cell level is calculated by considering a delay at a beam level for the largest beam size. When a beam size is small or medium, a cell may include at least two beams. But, a cumulative differential delay of all beams in a cell does not exceed the maximum differential delay at a cell level of Table 8.

A NTN-related description in the present disclosure may be applied to a NTN GEO scenario and all NGSO (non-geostationary orbit) scenarios having a circular orbit with an altitude of 600km or more.

And, the description (a NR frame structure, a NTN, etc.) may be applied in combination of methods which will be described later, and may be supplemented to clarify a technical characteristic of a method described in the present disclosure.

Method of Configuring TA (timing advance) Value in NTN

In a TN, a terminal moves in a cell, so although a distance between a base station and a terminal changes, a PRACH preamble transmitted by a terminal may be transmitted to a base station within a time duration of a specific RO (RACH occasion).

And, a TA value for transmitting an uplink signal/channel by a terminal may be configured with an initial TA value and a TA offset value. Here, an initial TA value and a TA offset value may be indicated by a base station as a TA value which may be expressed in a cell coverage scope of a base station.

In another example, when a base station indicates a PDCCH order through DCI, a terminal may transmit a PRACH preamble to a base station. A terminal may transmit an uplink signal/channel to a base station by using a TA value (i.e., an initial TA value) indicated through a response message for a preamble received from a base station (random access response, RAR).

In a NTN, a distance between a satellite and a terminal is changed by movement of a satellite regardless of movement of a terminal. In order to overcome it, a terminal may figure out a position of a terminal through a GNSS (global navigation satellite system) and calculate a LTE-specific TA, a round trip delay (RTD) between a terminal and a satellite, through orbit information of a satellite indicated by a base station.

Here, a UE-specific TA, when a PRACH preamble is transmitted at a RO selected by a terminal, may be configured so that a satellite (or a base station (gNB)) may receive a PRACH preamble within a time duration of the RO.

And, when only a UE-specific TA is applied when a PRACH preamble is transmitted at a RO selected by a terminal, the PRACH preamble may be delayed from a reference time of the RO and transmitted to a satellite (or gNB). In this case, an initial TA value indicated by a RAR received from a base station may indicate the delayed value.

Additionally, a common TA may refer to a RTD between a satellite and gNB (or a reference point) on the ground. Here, a reference point may refer to a place where a downlink and uplink frame boundary matches. And, a common TA may be defined as being indicated by a base station to a terminal. If a reference point is in a satellite, a common TA may not be indicated and if a reference point is in gNB on the ground, a common TA may be used to compensate a RTD between a satellite and gNB.

Additionally, in a NTN, a TA value before transmission of message (Msg) 1 (e.g., a PRACH preamble)/Msg A (a PRACH preamble and a PUSCH) may be configured as a UE-specific TA and a common TA (if provided). Here, a UE-specific TA, as described above, may be a RTD between a satellite and a terminal calculated by a terminal itself.

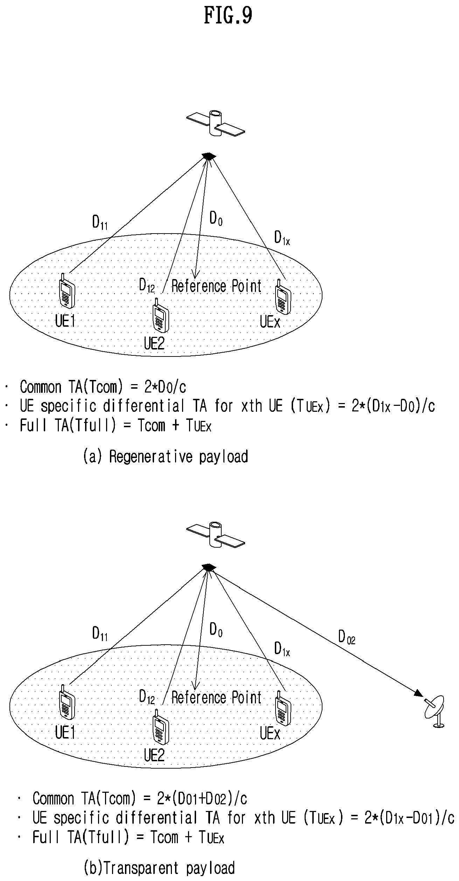

As an embodiment of the present disclosure, FIG. 9 illustrates a method of calculating a TA value in a wireless communication system supporting a NTN.

FIG. 8(a) illustrates a regenerative payload-based NTN scenario. A common TA (Tcom) (common to all terminals) may be calculated by 2D0(a distance between a satellite and a reference signal)/c and a UE-specific differential TA (TUEx) for a x-th terminal (UEx) may be calculated by 2(D1x-D0)/c. The Total TA (Tfull) may be calculated by 'Tcom + TUEx'. Here, D1x may refer to a distance between a satellite and UEx. Here, c may represent speed of light.

FIG. 8(b) illustrates a transparent payload-based NTN scenario. A common TA (Tcom) (common to all terminals) may be calculated by 2(D01+D02)/c and a UE-specific differential TA (TUEx) for a x-th terminal (UEx) may be calculated by 2(D1x-D0)/c. The Total TA (Tfull) may be calculated by 'Tcom + TUEx'. Here, D01 may refer to a distance between a satellite and a reference point and D02 may refer to a distance between a satellite and a base station on the ground.

NTN service-related Features

For a NTN service, NTN-specific (or NTN-related) system information may be provided to a terminal. NTN-specific system information may be included in at least one system information block (SIB).

Such NTN-related system information may include ephemeris, a common TA parameter, a validity duration for UL synchronization information, a service timing (t-Service), a cell reference location, an epoch time, $k_{mac}$, $K_{offset}$, an indication for whether TA reporting is enabled/disabled, etc.

For example, during a validity duration, a terminal may assume/expect that trajectory information, etc. is valid and may calculate/apply/report a TA based on it. For example, t-Service may include timing information related to a time point when a serving cell stops serving a corresponding region, which may be broadcast by a quasi-earth fixed cell, not an earth moving cell. A cell reference position may be broadcast by a quasi-earth fixed cell or may be broadcast by an earth moving cell. $k_{mac}$ may correspond to a round trip time (RTT) between a reference point (RP) and gNB. $K_{offset}$ may correspond to a RTT between a terminal and a UL synchronization RP and may correspond to a sum of a service link RTT and a common TA (if indicated).

A terminal may not explicitly receive an indication for which cell provides a NTN or a TN service. For example, based on at least one of the above-described NTN-specific system information, whether a cell to which a terminal is attached is a NTN cell may be implicitly indicated to a terminal. Furthermore, a terminal may figure out what type of NTN platform it is based on ephemeris data.

Regarding an operation in a NTN cell, a terminal may support an operation differentiated from a TN service in a scheduling offset, time and/or frequency synchronization, a HARQ, polarization mode signaling, etc.

For example, a scheduling offset may include application of cell-specific and/or terminal-specific $K_{offset}$, application of $k_{mac}$, TA reporting of a terminal, etc.

For example, time/frequency synchronization may include terminal-specific TA calculation based on a GNSS, common TA calculation, frequency compensation, etc.

For example, by considering a delay increased compared to a TN service, a HARQ operation for a NTN service may include the increased number of HARQ processes (e.g., for a DL and a UL, 16 and 32, 32 and 16, or 32 and 32 HARQ processes), HARQ feedback enabling/disabling, HARQ codebook enhancement, etc. HARQ codebook enhancement may include supporting a type-1/2/3 HARQ-ACK codebook. A type-1 HARQ-ACK codebook may be referred to as a semi-static codebook, has the fixed number of bits to be transmitted in ACK/NACK reporting and may support a relatively large number of bits compared to other type. A type-2 HARQ-ACK codebook corresponds to a dynamic or enhanced dynamic codebook, is a type in which a terminal transmits a feedback only for a scheduled carrier/CC/cell and may be provided as a downlink assignment index (DAI) is included in DCI in order to prevent a terminal from misrecognizing the number of carriers/CCs/cells according to a channel state. A type-3 HARQ-ACK codebook corresponds to a one-shot feedback type and is a method in which a terminal transmits ACK/NACK reporting for all carrier(s)/CC(s)/cell(s) corresponding to a specific PUCCH group or a HARQ process ID.

NTN-related Timing Feature

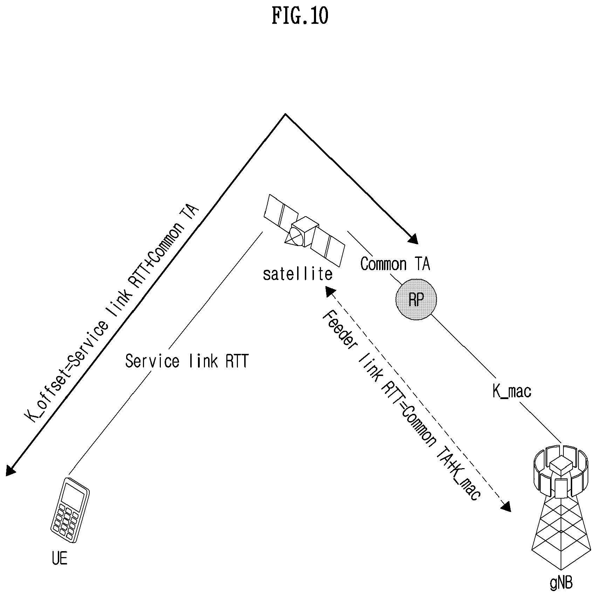

FIG. 10 is a diagram for describing a timing-related operation of a NTN service support system to which the present disclosure may be applied.

In order to accept a large propagation delay in a system supporting a NTN service, a NR timing-related operation including a DL-UL timing interaction may be improved by supporting two scheduling offsets (e.g., $K_{offset}$ and $k_{mac}$).

In an example of FIG. 10, $K_{offset}$ may correspond to a RTT between a terminal (UE) and a UL synchronization RP and may correspond to a sum of a service link RTT and a common TA (if indicated). A feeder link RTT may correspond to a sum between a common TA and $k_{mac}$. In other words, $k_{mac}$ may correspond to a RTT between a RP and a base station (gNB).

A timing relationship modified based on $K_{offset}$ for a NTN operation is as follows:

- Transmission timing of a PUSCH scheduled by DCI (including CSI transmission on a PUSCH);
- PUSCH transmission timing scheduled by a random access response (RAR) grant or a fallback RAR grant;
- First PUSCH transmission opportunity in a type-2 configured grant (CG) (here, a type for a CG-based PUSCH may include a type-1 CG-based PUSCH activated through higher layer signaling and a type-2 CG-based PUSCH activated through DCI. For a CG-based PUSCH, the same TB may be repeatedly transmitted and a repeat transmission period may be applied);
- HARQ-ACK transmission timing on a PUCCH (including HARQ-ACK for MsgB in a 2-step random access process);
- Transmission timing of a PRACH initiated by a PDCCH order;
- Timing of uplink transmission timing adjustment according to reception of a timing advance command (TAC);
- Transmission timing of an aperiodic SRS;

- CSI reference resource timing, etc.

In other words, $K_{offset}$ may be referred to as a timing offset related to uplink transmission.

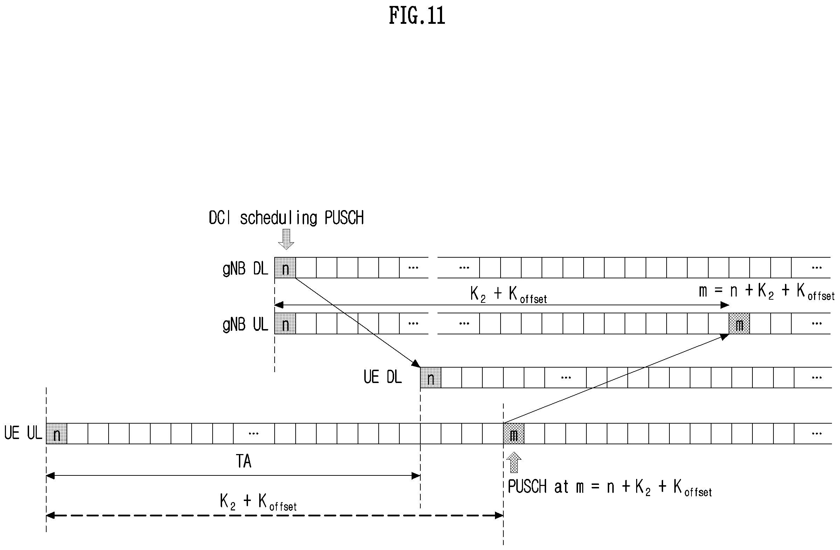

FIG. 11 is a diagram for describing a $K_{offset}$-related timing in a NTN operaiton to which the present disclosure may be applied. In addition, a cell-specific $K_{offset}$ value may be broadcast through a SIB and a terminal-specific $K_{offset}$ value may be applied. In other words, $K_{offset}$ may correspond to a value excluding a terminal-specific $K_{offset}$ value from cell-specific $K_{offset}$.

An example of FIG. 11 represents an example in which a transmission timing for a PUSCH scheduled by DCI is modified/adjusted by $K_{offset}$. For example, when UL grant DCI/PDCCH is received in slot n and a value of K2 is provided, it represents that slot m, a PUSCH transmission timing, is slot n+K2+$K_{offset}$. In other words, if $K_{offset}$ is not applied, it may be distinguished from an example that PUSCH transmission is performed in slot n+K2 (e.g., FIG. 7(b)). An example of FIG. 11 assumes that DL SCS and UL SCS are the same.

An example of FIG. 11 additionally represents that a timing advance (TA) value for uplink transmission is applied. For a NTN, a TA value may be determined by a common TA and/or a terminal-specific TA.

For initial access, $K_{offset}$ information may be provided through system information. $K_{offset}$ information update after initial access may be supported. Terminal-specific $K_{offset}$ information may be provided and updated by a network through a MAC CE.

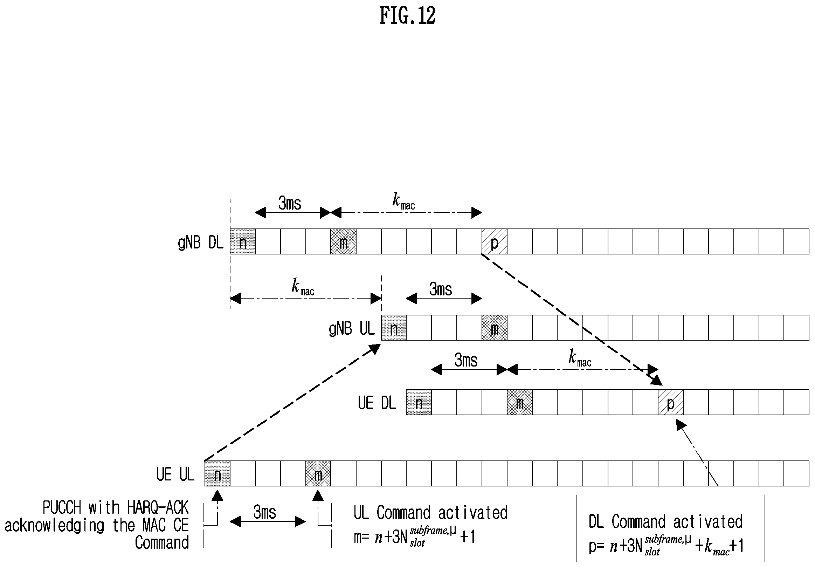

FIG. 12 is a diagram for describing a $k_{mac}$-related timing in a NTN operaiton to which the present disclosure may be applied.

A $k_{mac}$ scheduling offset may be defined to support MAC CE timing relationship improvement in a NTN. When a DL and LTL frame timing is not aligned in a base station (gNB), $k_{mac}$ may be provided to a terminal by a network. For a terminal operation and assumption for a DL configuration indicated by a MAC CE command in a PDSCH, application of $k_{mac}$ may be required. $k_{mac}$ may be also applied to beam failure recovery, and for example, after PRACH transmission in UL slot n, a terminal may monitor a PDCCH corresponding in a RAR window starting from DL slot n+$k_{mac}$+4.

If a $k_{mac}$ value is provided for a terminal, when PUCCH transmission including HARQ-ACK information is performed in UL slot n corresponding to a PDSCH including a MAC CE command for a DL configuration, a terminal assumption and operation for a DL configuration may be applied by starting from a first slot after slot n+3 *$N_{slot}^{subframe,\mu}$+$k_{mac}$. Here, $\mu$ corresponds to a SCS configuration index for a PUCCH and corresponds to the number of slots per subframe for $N_{slot}^{subframe,\mu}$ $\mu$.

Hereinafter, pre-compensation in a time domain and a frequency domain in a NTN is described.

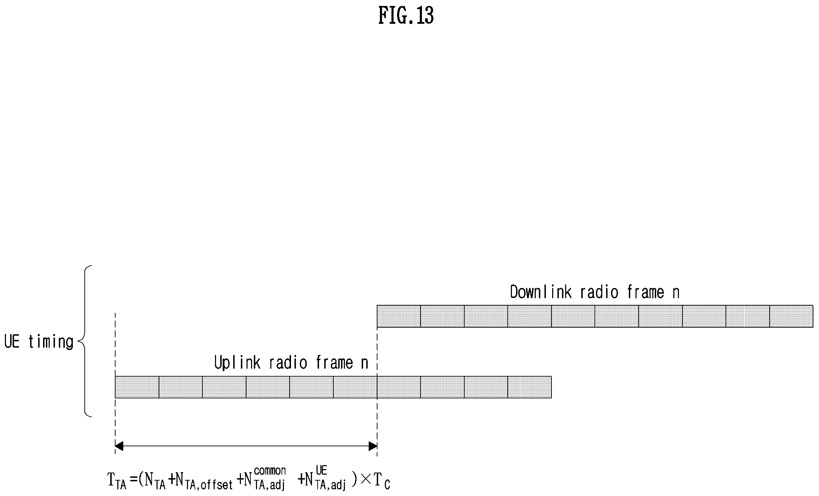

FIG. 13 is a diagram for describing a timing advance in a NTN operaiton to which the present disclosure may be applied.

In order to accept a long propagation delay experienced both in a service link and a feeder link in a NTN, a terminal may perform time pre-compensation for all LTL transmission (e.g., PRACH preamble transmission, uplink transmission in a RRC_CONNECTED state, etc.). For this pre-compensation, a terminal may receive assistance by assistance information, GNSS, etc. periodically broadcast from a network. Assistance information, for example, may include a higher layer common TA related parameter, serving satellite ephemeris, etc. A common TA related parameter may be used to calculate a common RTD such as a delay on a feeder link.

TA calculation for PRACH preamble transmission of a NTN terminal and in a RRC_CONNECTED state, for example, may follow Equation 3.

【Equation 3】

$$T_{TA} = \left( N_{TA} + N_{TA,offset} + N_{TA,adj}^{common} + N_{TA,adj}^{UE} \right) \times T_c$$

In Equation 3, $N_{TA}$ may be determined differently according to a TAC provided through a RAR or a MAC CE. For example, a 12-bit TAC field provided through a RAR may have a value of 0 to 3846 and a 6-bit TAC field of a MAC CE format may have a value of 0 to 63. $N_{TA,offset}$ may be a TA offset value generated by a duplex mode difference, etc. Basically, $N_{TA,offset}$ may have a value of 0 in FDD (Frequency Division Duplex), but in TDD (Time Division Duplex), $N_{TA,offset}$ may be defined as a predetermined value by considering a margin for a DL-UL switching time. In addition, a default value of $N_{TA,offset}$ may be given as a different value according to a frequency range. $T_c$ is a basic time unit in a NR, and for example, may be $T_c = 1/(\Delta f_{max} \cdot N_f)$ (e.g., $\Delta f_{max} = 480 \cdot 10^3$ and $N_f = 4096$).

In Equation 3, $T_{TA,adj}^{common}$ corresponds to a common TA controlled by a network and may include a timing offset (e.g., a feeder link delay) determined to be necessary by a network. That value may be provided by a corresponding parameter when higher layer parameter TACommon, TACommon, TACommonDrift, TACommonDriftVariation, etc. are configured and otherwise, a value of 0 may be applied.

$N_{TA,adj}^{UE}$ corresponds to a TA self-estimated by a terminal for pre-compensation for a service link delay. That value may be calculated by a terminal based on a corresponding parameter and a terminal position, etc. when a serving satellite-ephemeris-related higher layer parameter is provided and otherwise, a value of 0 may be applied to that value.

Next, frequency pre-compensation in a terminal is described. For a counter shift for an instantaneous doppler shift experienced on a service link, a terminal may calculate frequency pre-compensation by using an acquired GNSS position and (if provided by a network) serving satellite ephemeris information.

Other than this frequency pre-compensation by a terminal, management of a doppler shift experienced on a feeder link, whether a transponder frequency error affects a DL or a LTL, etc. may be applied according to network implementation.

Time Offset between DL Reception and LTL Transmission (or DL Transmission and LTL Reception) in a NTN

A variety of examples of the present disclosure applying a time offset between downlink reception (or transmission) and uplink transmission (or reception) are described below.

As described above, the maximum number of HARQ processes in a NTN may be increased up to 32. It is to support an increased delay in a NTN, and for a similar purpose, extending a range of a K1 (i.e., a time offset between DL data reception and HARQ-ACK transmission) value (e.g., for unpaired spectrum or TDD, extending from an existing 0 to 15 to 0 to 31) may be also considered. Additionally, extending a range of a K1 value may be also considered so that a network can fully utilize consecutive DL slots for PDSCH transmission for at least one terminal, i.e., secure flexibility of scheduling/configuration of a network. In this regard, the present disclosure includes examples of applying an additional modification/offset to K1 and this additional offset is referred to as K1_offset. This K1_offset is a new timing-related parameter distinguished from the above-described $K_{offset}$ (or K_offset).

A range of an existing K1 value may be determined as follows. For example, a range of a K1 value may be determined based on a higher layer parameter 'dl-DataToLTL-ACK'. Specifically, a dl-DataToLTL-ACK parameter corresponds to a list of timings for PDCSCH-to-DL ACK and may configure up to 8 among 0 to 15 values. In addition, a dl-DataToUL-ACKForDCIFormat1_2 parameter may be configured in addition to/instead of dl-DataToLTL-ACK. A PDSCH-to-HARQ_feedback timing indicator field in DCI may indicate one of codepoints corresponding to a value configured by dl-DataToLTL-ACK. A bit width of a PDSCH-to-HARQ_feedback timing indicator field may be determined by ceiling($\log_2$(I)), I corresponds to the number of entries of a higher layer parameter dl-DataToLTL-ACK and ceiling(x) means the minimum integer equal to or greater than x. The bit width may be 3 bits when one of entries up to 8 is indicated, may be 2 bits when one of entries up to 4 is indicated and may be 1 bit when one of entries up to 2 is indicated.

For example, mapping between a value of a PDSCH-to-HARQ_feedback timing indicator field in DCI and the number of slots (e.g., a K1 value) may be defined as in Table 9 below.

[Table 9]

| PDSCH-to-HARQ_feedback timing indicator | | | Number of slots |
|---|---|---|---|
| 1 bit | 2 bits | 3 bits | |
| '0' | '00' | '000' | 1st value provided by dl-DataToLTL-ACK or by dl-DataToUL-ACKForDCIFormat1_2 |
| '1' | '01' | '001' | 2nd value provided by dl-DataToUL-ACK or by dl-DataToUL-ACKForDCIFormat1_2 |
| | '10' | '010' | 3rd value provided by dl-DataToLTL-ACK or by dl-DataToUL-ACKForDCIFormat1_2 |
| | '11' | '011' | 4th value provided by dl-DataToLTL-ACK or by dl-DataToUL-ACKForDCIFormat1_2 |
| | | '100' | 5th value provided by dl-DataToLTL-ACK or by dl-DataToUL-ACKForDCIFormat1_2 |
| | | '101' | 6th value provided by dl-DataToLTL-ACK or by dl-DataToUL-ACKForDCIFormat1_2 |
| | | '110' | 7th value provided by dl-DataToLTL-ACK or by |
| | | '111' | 8th value provided by dl-DataToLTL-ACK or by dl-DataToUL-ACKForDCIFormat1_2 |

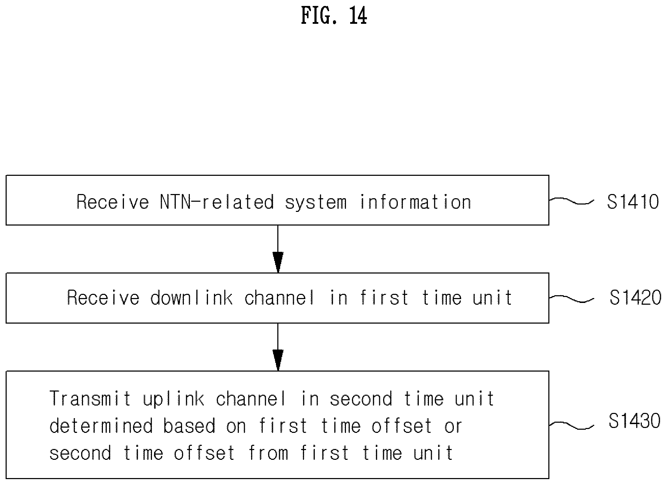

FIG. 14 is a diagram for describing an exemplary method of applying an additional time offset between DL reception and LTL transmission of a terminal in a NTN according to an example of the present disclosure.

In S 14 10, a terminal may receive NTN-related system information from a base station. As described above, NTN-related system information may include satellite ephemeris, scheduling offset ($K_{offset}$) information including a RTT between a terminal and a RP, etc. For a more specific example of NTN-related system information, the above-described description may be referred to.

In S1420, a terminal may receive a downlink channel from a base station in a first time unit.

In S1430, a terminal may transmit an uplink channel to a base station in a second time unit determined based on a first time offset or a second time offset from a first time unit.

In S1420 and S1430, a downlink channel and an uplink channel may be a PDSCH and a PUCCH (or a PUSCH), respectively, or may be a PDCCH and a PUSCH, respectively.

For example, a PDSCH may be received in a first time unit and UCI including HARQ-ACK corresponding thereto (i.e., representing whether decoding for a PDSCH is successful) may be transmitted in a second time unit through a PUCCH/a PUSCH. Alternatively, LTL grant DCI may be received in a first time unit and PUSCH transmission corresponding thereto (i.e., scheduled by a PDCCH/DCI) may be performed in a second time unit.

Here, the number of time units from a first time unit to a second time unit may be based on a first time offset or a second time offset. A first time offset may be determined based on a base offset and an additional offset. A second time offset may be determined based on a base offset alone.

For example, when DL-LTL transmission or reception corresponds to PDSCH-PUCCH/PUSCH transmission or reception, a base offset corresponds to a K1 value indicated by DCI (e.g., acquired based on a value of a PDSCH-to-HARQ_feedback timing indicator field in DCI) and an additional offset corresponds to K1_offset. Specific examples of the present disclosure for an indication/a determination of K1_offset are described later.

For example, when DL-LTL transmission or reception corresponds to PDCCH-PUSCH transmission or reception, a base offset corresponds to a K2 value indicated by DCI (e.g., acquired based on a value of a time domain resource assignment field in DCI) and an additional offset corresponds to K2_offset. Specific examples of the present disclosure for indicating/determining K2_offset are described later.

A first time offset is a final time offset to which K1_offset and/or K2_offset for supporting a K1 and/or K2 value extended in a NTN is applied and a second time offset corresponds to an existing K1 and/or K2 for supporting a K1 and/or K2 value which is not extended in a NTN.

According to the present disclosure, a size of a field related to a base offset of a first time offset in a DCI format is the same as a size of a field related to a base offset of a second time offset in a DCI format. In other words, a size of a field itself (e.g., a PDSCH-to-HARQ_feedback timing indicator field or a TDRA field) in DCI indicating a base offset is the same when a first time offset or a second time offset is supported/indicated and a variety of methods for supporting/indicating an additional offset in a first time offset may be applied.

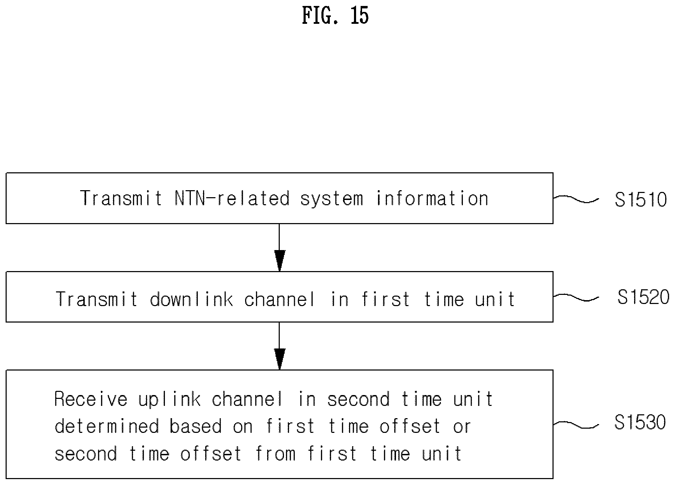

FIG. 15 is a diagram for describing a method in which a base station supports an additional time offset applied between DL transmission and LTL reception in a NTN according to an example of the present disclosure.

In S 1510, a base station may transmit (or broadcast) NTN-related system information to at least one terminal. S1410 of FIG. 14 or the above-described description may be applied to specific matters for NTN-related system information.

In S 1520, a base station may transmit a downlink channel from a first time unit to a terminal and in S1530, a base station may receive an uplink channel from a terminal in a second time unit determined based on a first time offset or a second time offset from a first time unit.

In S 1520 and S1530, a downlink channel and an uplink channel may be a PDSCH and a PUCCH (or a PUSCH), respectively, or may be a PDCCH and a PUSCH, respectively. Here, the number of time units from a first time unit to a second time unit may be based on a first time offset or a second time offset. Specific matters for a first time offset and a second time offset, in particular, contents for a base offset configuring a first time offset (e.g., K1 and/or K2) and an additional offset (e.g., K1_offset and/or K2_offset) may include contents described in S1420 and S1430 of FIG. 14 and specific examples described later.

Hereinafter, a variety of examples of the present disclosure related to a base offset and an additional offset are described.

In the present disclosure, an example in which a time unit corresponds to a slot is mainly described below for clarity of a description, but a scope of the present disclosure may include granularity of various time units such as a symbol, a symbol group, a slot, a slot group, etc.

Embodiment 1

As described above, for unpaired spectrum or TDD, a range of a K1 value may be increased. In this regard, it is necessary to define a specific method that a base station/a network indicates a K1 value of an extended range to a terminal.

For both fallback DCI and non-fallback DCI (or without distinguishing fallback/non-fallback DCI), a size/a bit width of a field in DCI for a K1 indication (e.g., an existing maximum 3-bit PDSCH-to-HARQ_feedback timing indicator field) may not be increased. This maximum 3-bit field in DCI is referred to as a K1 indication field. In other words, both when extended K1 (a first time offset in FIG. 14 and FIG. 15) is indicated and when an existing K1 (a second time offset in FIG. 14 and FIG. 15) is indicated, a size of a K1 indication field in DCI (i.e., a field indicating a base offset or a base K1 offset) is equal.

In order to indicate extended K1, a method of indicating an additional offset (K1_offset) and a method of indicating an extended K1 value itself considering a base offset (K1) and an additional offset (K1_offset) are described.

Embodiment 1-1

This embodiment relates to a method of indicating an extended K1 value itself (or a K1 value corresponding to a result obtained by applying an additional offset (K1_offset) to a base offset (K1)).

A K1 indication field in DCI (e.g., a PDSCH-to-HARQ_feedback timing indicator field) may have the maximum size of 3 bits and indicate one of up to 8 codepoints (e.g., a first value to an eighth value of dl-DataToUL-ACK in Table 9). Here, a range of a K1 value to which a value of a K1 indication field is mapped may be extended from existing 0-15 to 0-31. A range of a K1 value is configured by higher layer (e.g., RRC) signaling, and for example, a value of a parameter such as dl-DataToLTL-ACK may be configured as up to 8 values among 0-31.

As such, a method of extending a range of a K1 value to which a value of a K1 indication field in DCI is mapped may be applied to non-fallback DCI and in addition, it may be also applied to fallback DCI.

Here, for fallback DCI unlike non-fallback DCI, when actual K1 values mapped to a codepoint of a K1 indication field in DCI are configured through RRC signaling, ambiguity may occur due to different understanding of a RRC reconfiguration between a base station and a terminal. In order to solve this problem, in scheduling by fallback DCI, actual K1 values mapped to a codepoint of a K1 indication field in DCI may be broadcast to a SIB, not RRC, within a range of 0-31. A set including up to 8 K1 values (e.g., {12, 13, 15, 17, 18, 19, 20, 21}) within a range of 0-31 through a SIB may be provided to a terminal through a SIB. Based on it, a K1 value to be used by a terminal at a specific time point is indicated to a K1 field in DCI.

In indicating a set including up to 8 K1 values through a SIB, a length-31 bitmap corresponding to a range of 1-31 or a length-32 bitmap corresponding to a range of 0-31 may be defined and a value corresponding to a bit value of 1 (or a bit value of 0) at each bit position of a corresponding bitmap may be configured as a K1 value included in the set.

Additionally or alternatively, a combinatorial number may be used to indicate 8 (or 4 or 2) selected among 31 or 32 such as $_{31}C_8$ or $_{32}C_8$.

Additionally or alternatively, in order to reduce signaling overhead, a plurality of sets of K1 values may be predefined (i.e., applied without signaling between a base station and a terminal) or may be preconfigured/pre-promised (i.e., applied through signaling between a base station and a terminal) and one set of a plurality of sets may be configured/indicated by a base station to a terminal. For example, after defining/configuring in advance 4 sets of set0={1,2,3,4,5,6,7,8}, set1={9,10,11,12,13,14,15,16}, set2={ 17, 18, 19,20,21,22,23,24}, set3={25,26,27,28,29,30,31, reserved}, one of 4 sets may be configured/indicated to a terminal by using a 2-bit indicator. An element included in a plurality of sets (i.e., a K1 value, for example, a range of 0 to 31) is not limited to being sequential or non-overlapping, the same K1 value is included in at least two different sets or K1 values included in one set may be discontinuous. In addition, the number of elements included in a different set may be different. In addition, the number of predefined/preconfigured sets may be 2, 4, 8, ....

Embodiment 1-2

Hereinafter, a method of indicating an additional offset (K1_offset) is described.

Embodiment 1-2-1

A method of implicitly indicating K1_offset (e.g., a method of indicating K1_offset based on a slot index, a SFN, a PDCCH CCE index, a PDSCH-related index, etc.) may be applied.

In order to indicate an extended K1 value, additional X (X=1 or 2) bit information may be utilized without extending a size of a field indicating a K1 value in DCI (e.g., a PDSCH-to-HARQ _feedback timing indicator field), i.e., by maintaining an existing size (or bit width) (e.g., up to 3 bits). Additional X bit information may be referred to as K1_offset indicated implicitly (e.g., based on information for other purpose).

K1_offset indicated implicitly may be applied both to fallback DCI (e.g., DCI format 1_0) and non-fallback (e.g., DCI format 1_1, 1_2, etc.). A value of K1_offset indicated implicitly may be determined based on a slot index, a system frame number (SFN), a lowest/highest CCE index including DCI, a lowest/highest index of a PDSCH scheduled by DCI (e.g., an index of a RB that a PDSCH is allocated), etc. A value of K1_offset indicated implicitly in this way may be combined with a value of the number of slots indicated by the maximum 3-bit PDSCH-to-HARQ_feedback timing indicator to indicate a K1 value of a final extended range. A value of 1-bit K1_offset indicated implicitly may correspond to a least significant bit (LSB) value of a K1 value of a final extended range or may correspond to a most significant bit (MSB) value.

For non-fallback DCI, a size of a field indicating a K1 value in DCI (e.g., a PDSCH-to-HARQ_feedback timing indicator field) may be extended (e.g., up to 5 bits) and for fallback DCI, K1_offset indicated implicitly as described above may be applied.

Without extending a size of a field where both non-fallback DCI and fallback DCI indicate a K1 value (e.g., a PDSCH-to-HARQ_feedback timing indicator field), K1_offset indicated implicitly as described above may be applied to non-fallback DCI and only a field indicating a K1 value in the maximum 3-bit size as before may be utilized for fallback DCI.

As an additional example, K1_offset indicated implicitly may be used to indicate a HARQ process ID. In addition, K1_offset indicated implicitly may be commonly/individually applied to a determination of a final K1 value and/or a determination of a HARQ process ID.

For example, a value of 1-bit or 2-bit information may be determined by applying a modulo (mod) 2 or mod 4 operation to a basic value such as a slot index, etc. When K1_offset indicated implicitly is applied to both a HARQ process ID and a K1 offset indicator, joint-encoding may be performed for 4 possible combinations. In addition, information indicating whether joint encoding is applied may be additionally defined.

Embodiment 1-2-2

A variety of methods may be applied to a configuration related to a value indicated by a K1 indication field in DCI. This configuration may be related to a method of interpreting a value of a K1 indication field. For example, this configuration may be differently defined/applied to fallback DCI and non-fallback DCI. Alternatively, a different configuration method may be applied according to a terminal capability, a network environment, whether an increased delay is supported, etc.

For example, a variety of configuration methods related to a value indicated by a K1 indication field may be applied to fallback DCI. But, it does not exclude application of a variety of configuration methods described below to non-fallback DCI. These various configuration methods, for example, may include a fixed/static configuration method and a variable/configurable configuration method.

A fixed/static configuration method does not mean that that value is unchanging, and may mean that it is applied as a common value to terminals in a cell like system information or that a period during which that value is applied is relatively long. A variable/configurable configuration method may mean that it is applied as an individual/independent value per terminal/terminal-group in a cell or that a period during which that value is applied is relatively short.

Basically, for fallback DCI (e.g., DCI format 1_0), a value of a K1 indication field (e.g., a PDSCH-to-HARQ_feedback timing indicator field) may be indicated/configured through a fixed mapping pattern as mapped to {1, 2, 3, 4, 5, 6, 7, 8}. In other words, unlike a method in which a codepoint to which 8 values of values in a range of 0-15 are mapped is configured through RRC, etc. and one codepoint is indicated through non-fallback DCI, in fallback DCI, a value of a K1 indication field may directly indicate an actual K1 value. In order to indicate an extended K1 value range through fallback DCI, an additional offset (K1_offset) may be applied in a fixed or configurable way.

In the following description, for clarity, it is described by assuming that a K1 indication field (i.e., a field indicating a base K1 offset) indicates 3 bits, i.e., one of 8 values, but even when a K1 indication field is configured in a 1-bit or 2-bit size, an additional offset (K1_offset) may be applied in a manner similar to the following examples.

For example, an extended K1 value may be indicated through an additional offset (K1_offset) added to {1, 2, 3, 4, 5, 6, 7, 8} which is a value of a K1 indication field (i.e., a field indicating a base K1 offset) (i.e., K1_offset+{1, 2, 3, 4, 5, 6, 7, 8}).

For a fixed method, a K1_offset value may be broadcast through a SIB. For example, a K1_offset value may be determined based on an existing K_offset value provided through a SIB (e.g., as the same value as a K_offset value or as a value calculated based on a K_offset value).

Additionally or alternatively, a K1_offset value may be explicitly signaled/indicated separately from K_offset through a SIB.

To reduce signaling overhead for K1_offset, K1_offset may be defined as a multiple value. For example, K1_offset may be applied in a form of a multiple (i.e., a multiple of 0, a multiple of 1, a multiple of 2, etc.) of a specific number (e.g., 8). For example, when a K1 value is expressed as 8*n (here, n=0,1,2,3), a value of n here may be signaled as a K1_offset value. In this case, 2-bit information may be included in a SIB to indicate a value of n.

For example, a value of K1_offset signaled/indicated through a SIB may be added with a value of a K1 indication field in DCI (i.e., a base K1 offset indication field) to indicate an extended K1 value in a range of 1 to 8 for n=0, in a range of 9 to 16 for n=1, in a range of 17 to 24 for n=2 and in a range of 25 to 32 for n=3.

Additionally or alternatively, the minimum value of candidates of an actual K1 value (i.e., an extended K1 value in a range of 0-31) which may be scheduled/indicated through non-fallback DCI may be applied as a K1_offset value. For example, when candidates of an actual K1 value to which a codepoint of a K1 indication field of non-fallback DCI is mapped are {12, 13, 15, 17, 18, 19, 20, 21}, a value of K1_offset may be indicated/determined as 12. This K1_offset value may be indicated explicitly or may be indicated implicitly (i.e., based on a K1 configuration related to non-fallback DCI).

Next, for a configurable method, a K1_offset value may be configured/indicated through at least one of RRC, MAC CE or DCI.

For example, candidates of K1_offset may be configured through a SIB and a K1_offset value which will be actually applied among corresponding candidates may be signaled/indicated by at least one of RRC, MAC CE or DCI. Additionally or alternatively, a K1_offset value which will be actually applied may be directly signaled/indicated by at least one of RRC, MAC CE or DCI. Additionally or alternatively, candidates of K1_offset may be configured/indicated through RRC signaling and a K1_offset value which will be actually applied among corresponding candidates may be signaled/indicated by at least one of MAC CE or DCI.

Additionally or alternatively, an explicit offset field may be newly defined or added in DCI. For example, whether to apply K1_offset may be indicated through a 1-bit indicator field in DCI. A value of K1_offset to be applied may be defined/promised in advance or may be configured/indicated in advance. For example, when a plurality of K1_offset values are preconfigured through RRC signaling, an offset field in the DCI may indicate one of preconfigured K1_offset values.

As described above, when a K1 value determined/indicated based on K1_offset signaled/indicated in a fixed or configurable manner is a value (e.g., 32) beyond a valid range (0-31), a terminal may not expect to be scheduled/signaled for such a K1 value (i.e., a value beyond a valid range of a K1 value is treated as an error case) or may operate by mapping it to a value in a valid range (0-31) although such a value is indicated or may operate according to a result value obtained by applying a mod operation (e.g., mod 32).

Embodiment 2

In the above-described examples, it was described that a DL-LTL timing relates to a K1 offset related to a timing between a PDSCH and HARQ-ACK. A scope of the present disclosure is not limited thereto, and includes that the above-described examples related to a K1 offset are similarly applied for a case in which a K2 offset that a DL-UL timing is related to a PDCCH-PUSCH timing is extended.

As described above, a K2 value corresponds to the number of slots from a slot with a UL grant PDCCH to a slot with corresponding PUSCH transmission. A K2 value may be indicated based on a TDRA field on UL DCI. For example, a TDRA field may indicate one of 16 combinations (or rows) and one combination (or row) may specify a K2 offset, a PUSCH mapping type, a start and length indicator (SLIV) (or start symbol S and the number (or length) of allocation symbols L). In other words, a K2 value may be joint-encoded with other information and indicated through a TDRA field. A candidate for such a K2 value may be preconfigured through RRC signaling. A range of an existing K2 value is defined as 0-32.

For example, in PUSCH-TimeDomainResourceAllocation among RRC information elements (IE), a list including up to 16 PUSCH-TimeDomainResourceAllocation may be defined and each PUSCH-TimeDomainResourceAllocation may include one K2 value from 0-32. One K2 value of up to 16 may be indicated through a TDRA field with a size of up to 4 bits in DCI.

When a default PUSCH TDRA is applied, 16 possible K2 values may have a form of j, j+1, j+2, j+3, and here, a value of j may be determined as 1, 2, or 3 according to subcarrier spacing. For example, for subcarrier spacing configuration index ($\mu$) 0, 1, 2, and 3 (i.e., SCS 15, 30, 60, and 120 kHz), a value of j may be given as 1, 1, 2, and 3, respectively. In this case, a K2 value which may be indicated by a TDRA field in DCI may be 1, 2, 3, 4, 5, 6.

Similar to extending a range of a K1 value from 0-15 to 0-31 as described above, for a purpose of supporting an increased delay in a NTN or scheduling flexibility of a network, etc., extending a range of a K2 value to a range greater than 0-32 (e.g., 0-64) may be considered. 0-64, an extended range of a K2 value, is just illustrative, and a start value and an end value of a range of 0-63, 1-64, etc. may be different.

Regarding an extended K2 range, the present disclosure includes examples of applying an additional modification/offset for K2 and this additional offset is referred to as K2_offset. This K2_offset is a new timing-related parameter distinguished from the above-described $K_{offset}$ (or K_offset) and K1_offset.

A size/bit width of a field in DCI for a K2 indication (e.g., an existing maximum 4-bit time domain resource assignment (TDRA) field) may not be increased for both fallback DCI and non-fallback DCI (or without distinguishing fallback/non-fallback DCI). This maximum 4-bit field in DCI is referred to as a K2 indication field. In other words, both for a case of indicating an extended K2 (a first time offset in FIG. 14 and FIG. 15) and for a case of indicating an existing K2 (a second time offset in FIG. 14 and FIG. 15), a size of a K2 indication field in DCI (i.e., a field indicating a base offset or a base K2 offset) is equal.

In order to indicate extended K2, a method of indicating an additional offset (K2_offset) and a method of indicating an extended K2 value itself considering a base offset (K2) and an additional offset (K2_offset) are described.

Embodiment 2-1

This embodiment relates to a method of indicating an extended K2 value itself (or a K2 value corresponding to a result obtained by applying an additional offset (K2_offset) to a base offset (K2)).

As described above, a K2 indication field in DCI (e.g., a TDRA field) may have the maximum size of 4 bits and indicate one of up to 16 K2 values.

Here, a range of a K2 value to which a value of a K2 indication field is mapped may be extended from existing 0-32 to 0-64. A range of a K2 value is configured by higher layer (e.g., RRC) signaling, and for example, a value of a k2 parameter in PUSCH-TimeDomainResourceAllocation may be configured as up to 16 values among 0-64.

As such, a method of extending a range of a K2 value to which a value of a K2 indication field in DCI is mapped may be applied to non-fallback DCI and in addition, it may be also applied to fallback DCI.

Here, for fallback DCI unlike non-fallback DCI, when actual K2 values mapped to a codepoint of a K2 indication field in DCI are configured through RRC signaling, ambiguity may occur due to different understanding of a RRC reconfiguration between a base station and a terminal. In order to solve this problem, in scheduling by fallback DCI, actual K2 values mapped to a codepoint of a K2 indication field in DCI may be broadcast to a SIB, not RRC, within a range of 0-64. A set including up to 16 K2 values within a range of 0-64 through a SIB may be provided to a terminal through a SIB. Based on it, a K2 value to be used by a terminal at a specific time point is indicated to a K2 field in DCI.

For example, a set of K2 candidate values may be configured through a SIB and K2 values to be used in a TDRA field of DCI (i.e., to which a value of a TDRA field is mapped) may be configured through RRC signaling within a corresponding set. In other words, a range of a K2 value mapped to a value of a DCI TDRA field through RRC signaling may be limited to a set of K2 values indicated through a SIB. Finally, a K2 value may be indicated through a TDRA field of UL DCI. When there is no configuration related to K2 in RRC, a K2 candidate value broadcast to a SIB, a specific value of K2 candidate values (e.g., the lowest or highest value) or a predetermined default value (which may be defined separately from a default K2 value defined in an existing terrestrial network (NR TA)) may be applied.

In indicating a set including up to 16 K2 values through a SIB, a length-64 bitmap corresponding to a range of 1-64 or a length-65 bitmap corresponding to a range of 0-64 may be defined and a value corresponding to a bit value of 1 (or a bit value of 0) at each bit position of a corresponding bitmap may be configured as a K2 value included in the set.

Additionally or alternatively, a combinatorial number may be used to indicate 16 (or 16 or less K2 values) selected from 64 or 65 like $_{64}C_{16}$ or $_{65}C_{16}$.

Additionally or alternatively, in order to reduce signaling overhead, a plurality of sets of K2 values may be predefined (i.e., applied without signaling between a base station and a terminal) or may be preconfigured/pre-promised (i.e., applied through signaling between a base station and a terminal) and one set of a plurality of sets may be configured/indicated by a base station to a terminal. For example, after defining/configuring 4 sets in advance, one of 4 sets may be configured/indicated to a terminal by using a 2-bit indicator. An element included in a plurality of sets (i.e., a K2 value, for example, a range of 0 to 64) is not limited to being sequential or non-overlapping, the same K2 value is included in at least two different sets or K2 values included in one set may be discontinuous. In addition, the number of elements included in a different set may be different. In addition, the number of predefined/preconfigured sets may be 2, 4, 8, ....

Even when a default PUSCH TDRA is applied, a factor determining a K2 value (e.g., the above-described value of j) may not be predefined according to subcarrier spacing, but may be broadcast through a SIB. For example, according to a default PUSCH TDRA, a K2 value may be j, j+1, j+2, j+3 and here, for a value of j, a value of 4 or more may be provided to a terminal through a SIB instead of existing 1, 2, 3 or additionally. Based on it, an increased K2 value may be applied to a default PUSCH TDRA.

Additionally or alternatively, a set of K2 values themselves (or a value of j) may be configured through a SIB even for a default PUSCH TDRA. Values corresponding to a corresponding set may be configured by being mapped to an actual K2 value per each row index of a default TDRA table (e.g., by a specific rule).

Embodiment 2-2

Hereinafter, a method of indicating an additional offset (K2_offset) is described.

Embodiment 2-2-1

A method of implicitly indicating K2_offset (e.g., a method of indicating K2_offset based on a slot index, a SFN, a PDCCH CCE index, a PUSCH-related index, etc.) may be applied.

In order to indicate an extended K2 value, additional X (X=1 or 2) bit information may be utilized without extending a size of a field (e.g., a TDRA field) indicating a K2 value in DCI, i.e., by maintaining an existing size (or bit width) (e.g., up to 4 bits). Additional X bit information may be referred to as K2_offset indicated implicitly (e.g., based on information for other purpose).

K2_offset indicated implicitly may be applied to both fallback DCI (e.g., DCI format 0_0) and non-fallback (e.g., DCI format 0_1, 0_2, etc.). A value of K2_offset indicated implicitly may be determined based on a slot index, a system frame number (SFN), a lowest/highest CCE index including DCI, a lowest/highest index of a PDSCH scheduled by DCI (e.g., an index of a RB that a PDSCH is allocated), etc.

For example, when a result obtained by applying a mod 2 operation to a slot index is 0 (i.e., a slot of an even index), K2_offset=0 may be determined and when a result obtained by applying a mod 2 operation to a slot index is 1 (i.e., a slot of an odd index), K2_offset=1 may be determined. Here, a slot index may be an index of a slot that a PDCCH including corresponding DCI is detected or a specific slot index (e.g., a start slot index) of a PUSCH scheduled by the DCI.

For example, based on the lowest/highest CCE index of a PDCCH including/carrying DCI or the lowest/highest index of a PUSCH scheduled by DCI (e.g., a RB index that a PUSCH is allocated), a value of K2_offset indicated implicitly may be determined.

When a K2_offset value is pre-promised (i.e., predefined without signaling between a base station and a terminal) as a specific value (e.g., 32) or when a base station configures/indicates it to a terminal, the above-described method may be used as method for determining whether to apply a (predefined or preconfigured) K2_offset value. For example, it may be defined as K2 = base K2 offset + K2_offset*(Index mod 2). Here, Index may correspond to a slot index, a SFN, a PDCCH CCE index, a PUSCH index, etc. For example, when Index is a slot index, K2_offset may not be added in a slot of an even index and K2_offset may be added in a slot of an odd index. Additionally or alternatively, it may be defined as K2 = base K2 offset + K2_offset*(Index/N). Here, N may correspond to a predetermined integer.

Embodiment 2-2-2

In both fallback DCI and non-fallback DCI, a size of a K2 indication field (e.g., a TDRA field) may be maintained and K2_offset may be separately indicated. In other words, a K2 indication field in DCI may indicate a base K2 offset. A configuration method for K2_offset corresponding to an additional K2 offset may include a fixed configuration method and a variable/configurable configuration method.

For a fixed method, a K2_offset value may be broadcast through a SIB. For example, a K2_offset value may be determined based on an existing K_offset value provided through a SIB (e.g., as the same value as a K_offset value or as a value calculated based on a K_offset value).

Additionally or alternatively, a K2_offset value may be explicitly signaled/indicated separately from K_offset through a SIB.

In order to reduce signaling overhead for K2_offset, K2_offset may be defined as a form of a multiple of a specific number. For example, K1_offset may be defined as 8*n (here, n=0,1,2,3,4,5,6,7), 6*n (here, n=0,1,2,3,4,5,6,7,8,9,10), or 16*n (here, n=0,1,2,3) and a value of n may be signaled. In this case, 3-bit information or 2-bit information may be included in a SIB to indicate a value of n.

For example, when a value of a base K2 offset indicated through DCI may have a value of 1 to 6 (e.g., a default PUSCH TDRA) and K2_offset is defined in a form of 6*n, according to a sum of a base K2 offset and an additional K2 offset (K2_offset), an extended K2 value in a range of 1 to 6 may be indicated for n=0, an extended K2 value in a range of 7 to 12 may be indicated for n=1, an extended K2 value in a range of 13 to 18 may be indicated for n=2.... and an extended K2 value in a range of 61 to 66 may be indicated for n=10.

Additionally or alternatively, the minimum value of candidates of an actual K2 value (i.e., an extended K2 value in a range of 0-64) which may be scheduled/indicated through non-fallback DCI may be applied as a K2_offset value. For example, the minimum value among K2 values mapped to a value of a K2 indication field of non-fallback DCI (e.g., a combination/a row of a TDRA field) may be applied as the K2_offset.

For example, when a DCI format 0_1 (non-fallback DCI)-specific TDRA configuration (including K2 value(s)) is provided through RRC signaling, a corresponding TDRA configuration may be applied to DCI format 0_1, but a value of a TDRA field of DCI format 0_0 (fallback DCI) may be mapped to a K2 value according to a default TDRA. According to a default TDRA, as described above, a K2 value may be indicated as 1 to 6. Here, when candidates of a K2 value configured for non-fallback DCI are {12, 13, 15, 17, 18, 19, 20, 21}, a value of K2_offset may be indicated/determined as 12. This K2_offset value may be indicated explicitly or may be indicated implicitly (i.e., based on a K2 configuration related to non-fallback DCI).

Next, for a configurable method, a K2_offset value may be configured/indicated through at least one of RRC, MAC CE or DCI.

For example, candidates of K2_offset may be configured through a SIB and a K2_offset value which will be actually applied among corresponding candidates may be signaled/indicated by at least one of RRC, MAC CE or DCI.

Additionally or alternatively, a K2_offset value which will be actually applied may be directly signaled/indicated by at least one of RRC, MAC CE or DCI. Additionally or alternatively, candidates ofK2_offset may be configured/indicated through RRC signaling and a K2_offset value which will be actually applied among corresponding candidates may be signaled/indicated by at least one of MAC CE or DCI.

Additionally or alternatively, an explicit offset field may be newly defined or added in DCI. For example, whether to apply K2_offset may be indicated through a 1-bit indicator field in DCI. A value ofK2_offset to be applied may be defined/promised in advance or may be configured/indicated in advance. For example, when a plurality of K2_offset values are preconfigured through RRC signaling, an offset field in the DCI may indicate one of preconfigured K2_offset values.

As described above, when a K2 value determined/indicated based on K2_offset signaled/indicated in a fixed or configurable manner is a value beyond a valid range (0-64) (e.g., 65), a terminal may not expect to be scheduled/signaled for such a K2 value (i.e., a value beyond a valid range of a K2 value is treated as an error case) or may operate by mapping it to a value in a valid range (0-64) although such a value is indicated or may operate according to a result value obtained by applying a mod operation (e.g., mod 32).

Embodiment 3

For non-fallback DCI, a size of an offset indication field (e.g., a PDSCH-to-HARQ_feedback timing indicator related to K1 or a TDRA field related to K2) may be increased. For example, for DL DCI, a K1 indication field may be increased from an existing maximum 3 bits to the maximum 4 bits. For UL DCI, a K2 indication field may be increased from an existing maximum 4 bits to the maximum 5 bits. Accordingly, through an offset indication field in an increased size, a final offset considering both a base offset (i.e., K1 or K2) and an additional offset (i.e., K1_offset or K2_offset) (i.e., K1 of an extended range or K2 of an extended range) may be indicated.

For fallback DCI, since it is difficult to increase a field size in DCI or add a new field, a method of explicitly/implicitly indicating an additional offset (i.e., K1_offset or K2_offset) described in the above-described examples may be applied without increasing a size of a base offset indication field (e.g., a PDSCH-to-HARQ_feedback timing indicator related to K1 or a TDRA field related to K2).

Embodiment 4

For both fallback DCI and non-fallback DCI, a method of explicitly/implicitly indicating an additional offset (i.e., K1_offset or K2_offset) described in the above-described examples for non-fallback DCI may be applied without increasing a size of a base offset indication field in DCI (e.g., a PDSCH-to-HARQ_feedback timing indicator related to K1 or a TDRA field related to K2).

For fallback DCI, a DL-UL time offset based only on a basic offset may be applied (i.e., application of a second time offset described in FIG. 14 and FIG. 15). In other words, K1 of an extended range or K2 of an extended range may not be supported for fallback DCI.

As described above, it is required to increase a time offset between DL-UL transmission or reception by considering an increased delay/RTT in case of a non-terrestrial network (NTN), a high attitude platform station (HAPS), an air to ground (ATG), etc. Examples of the present disclosure include a variety of methods for efficiently defining/configuring/indicating an extended range of a time offset between DL-UL transmission or reception of K1 and K2, etc. For example, a method of configuring/indicating a K1 and/or K2 value of an increased range or defining/configuring/indicating a basic offset and an additional offset (e.g., K1_offset and/or K2_offset) is included. Accordingly, it is possible to effectively support an increased offset between DL-LTL transmission or reception in a communication environment having a long delay/RTT such as a NTN.

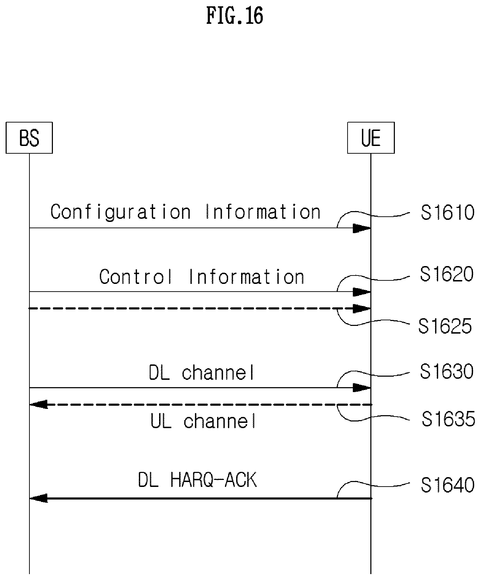

FIG. 16 is a diagram for describing a signaling process according to an embodiment of the present disclosure.

FIG. 16 represents an example of signaling between a network side (or a base station) and a terminal (UE) in a situation when at least one physical channel/signal to which the above-described examples of the present disclosure (e.g., Embodiment 1, 2, 3, 4 and a combination of at least one of examples described in detailed embodiments thereof) may be applied is NTN-transmitted.

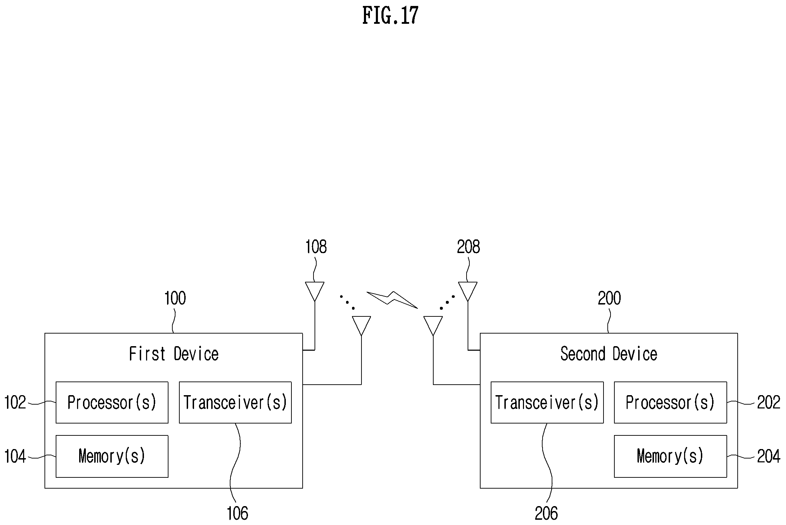

Here, UE/a network side is illustrative and may be applied by being replaced with a variety of devices as described by referring to FIG. 17. FIG. 16 is for convenience of a description, and it does not limit a scope of the present disclosure. In addition, some step(s) shown in FIG. 16 may be omitted depending on a situation and/or a configuration, etc. In addition, in an operation of a network side/UE in FIG. 16, the above-described uplink transmission or reception operation, etc. may be referred to or used.

In the following description, a network side may be one base station including a plurality of TRPs or may be one cell including a plurality of TRPs. Alternatively, a network side may include a plurality of remote radio heads (RRH)/remote radio units (RRU). In an example, an ideal/non-ideal backhaul may be configured between TRP 1 and TRP 2 configuring a network side. In addition, although the following description is described based on multiple TRPs, it may be extended and applied equally to transmission through multiple panels/cells, and it may be also extended and applied to transmission through multiple RRHs/RRUs.

In addition, in the following description, it is described based on a "TRP", but as described above, "TRP" may be applied by being replaced with an expression such as a panel, an antenna array, a cell (e.g., a macro cell/a small cell/a picocell, etc.), a transmission point (TP), a base station (a base station, gNB, etc.), etc. As described above, a TRP may be distinguished according to information (e.g., a CORESET index, a ID) on a CORESET group (or a CORESET pool). In an example, when one terminal is configured to perform transmission or reception with multiple TRPs (or cells), it may mean that multiple CORESET groups (or CORESET pools) are configured for one terminal. Such a configuration for a CORESET group (or a CORESET pool) may be performed through higher layer signaling (e.g., RRC signaling, etc.).

In addition, a base station may generally mean an object which performs transmission or reception of data with a terminal. For example, the base station may be a concept including at least one transmission point (TP), at least one transmission and reception point (TRP), etc. In addition, a TP and/or a TRP may include a panel of a base station, a transmission and reception unit, etc.

In reference to FIG. 16, an example of UL-DL transmission or reception operation signaling between a terminal/a base station is described in detail.

Although not shown in FIG. 16, as described in examples of the present disclosure (e.g., Embodiment 1, 2, 3, 4 and a combination of at least one of examples described in detailed embodiments thereof), a default HARQ operation mode of UE may be configured in a step before a RRC connection/configuration. For example, when (a cell accessed by UE) is explicitly/implicitly indicated as a NTN cell through a PBCH (MIB) or a SIB, UE may recognize that a default mode is configured as HARQ-disable. For example, a base station may indicate one of HARQ-disable configuration and HARQ-enable configuration(s) as a default operation mode through a PBCH (MIB) or a SIB (e.g., when identified as a NTN cell).

In addition, although not shown in FIG. 16, LTE may report to a base station capability information of UE related to the above-described examples of the present disclosure (e.g., Embodiment 1, 2, 3, 4 and a combination of at least one of examples described in detailed embodiments thereof). For example, LTE capability information may include information on the number of channel repeat reception supportable/recommended by a terminal (e.g., the number of PDSCH repetitions, the number of PUSCH repetitions), slot aggregation level information, the number of supportable HARQ processes, etc. For example, the UE capability information may be reported periodically/semi-persistently/aperiodically. A base station may configure/indicate operations described below by considering a capability of UE.

A base station (BS) may transmit configuration information to UE (a terminal) S1610. In other words, UE may receive configuration information from a base station. For example, the configuration information may include NTN-related configuration information, configuration information for DL transmission or reception (e.g., PDCCH-config/ PDSCH-config), a HARQ process-related configuration (e.g., whether a HARQ feedback is enabled/disabled, the number of HARQ processes, a HARQ process ID, etc.), a CSI report-related configuration (e.g., CSI report config, CSI report quantity, CSI-RS resource config, etc.), etc. described in examples of the present disclosure (e.g., Embodiment 1, 2, 3, 4 and a combination of at least one of examples described in detailed embodiments thereof). For example, the configuration information may be transmitted through higher layer (e.g., RRC/MAC CE) signaling. For example, whether a HARQ feedback is enabled/disabled may be configured per cell group. For example, whether a HARQ feedback is enabled/disabled may be configured through information in a bitmap form.

For example, the configuration information may include a merger factor, a configuration related to PDSCH repeat transmission (e.g., the number of repetitions, a repetition pattern, a repetition step size, etc.), etc.

For example, the configuration information may include a dl-DataToLTL-ACK parameter (e.g., related to K1) and may also include a k2 parameter in each of at least one PUSCH-TimeDomainResourceAllocation. In an example, at least one integer value in a range of 0 to 31 may be configured based on the dl-DataToUL-ACK parameter. In addition, at least one integer value in a range of 0 to 64 may be configured based on a k2 parameter in the PUSCH-TimeDomainResourceAllocation.

For example, the above-described operation that a base station in S1610 (100/200 in FIG. 17) transmits the configuration information to UE (200/100 in FIG. 17) may be implemented by a device in FIG. 17 to be described below. For example, in reference to FIG. 17, at least one processor 102 may control at least one transceiver 106 and/or at least one memory 104, etc. to transmit the configuration information, and at least one transceiver 106 may transmit the configuration information to LTE.

For example, the above-described operation that UE in S1610 (200/100 in FIG. 17) receives the configuration information from a base station (100/200 in FIG. 17) may be implemented by a device in FIG. 17 to be described below. For example, in reference to FIG. 17, at least one processor 102 may control at least one transceiver 106 and/or at least one memory 104, etc. to receive the configuration information, and at least one transceiver 106 may receive the configuration information from a base station.

A base station may transmit control information to LTE S1620/S1625. In other words, LTE may receive control information from a base station. For example, the control information may be transmitted/received through DCI.

For example, in S1620, the control information may include control information for DL channel (or DL data) transmission or reception, scheduling information, resource allocation information, HARQ feedback related information; for example, a new data indicator, a redundancy version, a HARQ process number, a downlink assignment index, a TPC command for scheduled PUCCH, a PUCCH resource indicator, a PDSCH-to-HARQ_feedback timing indicator, a modulation and coding scheme, frequency domain resource assignment, etc. For example, the DCI may be DCI format 1_0 (fallback DL DCI) or DCI format 1_1 (non-fallback DL DCI).

For example, in S1625, the control information may include control information for UL channel (or UL data) transmission or reception, scheduling information, resource allocation information, HARQ feedback related information; for example, an uplink/supplemental uplink indicator, a bandwith part indicator, frequency domain resource assignment, time domain resource assignment, a modulation and coding scheme, a new data indicator, a redundancy version, a HARQ process number, precoding information and the number of layers, a SRS request, a CSI request, a downlink assignment index, etc. For example, the DCI may be one of DCI format 0_0 (fallback UL DCI) or DCI format 0_1 (non-fallback LTL DCI).

For example, as described in examples of the present disclosure (e.g., Embodiment 1, 2, 3, 4 and a combination of at least one of examples described in detailed embodiments thereof), DCI may include information on a basic offset (K1 and/or K2) and an additional offset (K1_offset and/or K2_offset).

For example, whether a HARQ feedback is enabled/disabled may be configured based on DCI. For example, whether a HARQ feedback is enabled/disabled may be configured based on a PDSCH-to-HARQ_feedback timing indicator field/a PUCCH resource indicator field of DCI. For example, the DCI may include an aggregation level (/a repetition factor). For example, the number of HARQ processes may be configured as 16 or more and a HARQ process id may be distinguished based on a HARQ process number field included in DCI and an index of a CCE/a RB associated with the DCI.

For example, the above-described operation that a base station in S 1620/S 1625 (100/200 in FIG. 17) transmits the control information to UE (200/100 in FIG. 17) may be implemented by a device in FIG. 17 to be described below. For example, in reference to FIG. 17, at least one processor 102 may control at least one transceiver 106 and/or at least one memory 104, etc. to transmit the control information, and at least one transceiver 106 may transmit the control information to UE.

For example, the above-described operation that LTE in S1620/S1625 (200/100 in FIG. 17) receives the control information from a base station (100/200 in FIG. 17) may be implemented by a device in FIG. 17 to be described below. For example, in reference to FIG. 17, at least one processor 102 may control at least one transceiver 106 and/or at least one memory 104, etc. to receive the control information, and at least one transceiver 106 may receive the control information from a base station.

A base station may transmit a DL channel (e.g., a PDSCH) to UE S1630. In other words, UE may receive a DL channel from a base station. Alternatively, UE may transmit a UL channel (e.g., a PUSCH) to a base station S1635. In other words, a base station may receive a UL channel from UE.

For example, the DL channel/UL channel may be transmitted or received based on the above-described configuration information/control information. For example, the DL channel/UL channel may be transmitted or received based on examples of the present disclosure (e.g., Embodiment 1, 2, 3, 4 and a combination of at least one of examples described in detailed embodiments thereof). For example, the DL channel/UL channel may be repeatedly transmitted/received (e.g., based on slot aggregation).

For example, a PUSCH in S1635 may be transmitted in a time unit after a predetermined time offset (i.e., K2) from a time unit receiving a PDCCH including UL DCI in S1625. This K2 offset may have a value in an extended range (e.g., 0-64). A method of configuring/indicating such K2 (or a base K2 offset and an additional K2 offset) is the same as described in examples of the present disclosure (e.g., Embodiment 1, 2, 3, 4 and a combination of at least one of examples described in detailed embodiments thereof).

For example, the above-described operation that a base station in S1630/S1635 (100/200 in FIG. 17) performs DL channel transmission or LTL channel reception with LTE (200/100 in FIG. 17) may be implemented by a device in FIG. 17 to be described below. For example, in reference to FIG. 17, at least one processor 102 may control at least one transceiver 106 and/or at least one memory 104, etc. to transmit a DL channel or receive a UL channel, and at least one transceiver 106 may transmit a DL channel to UE or receive a LTL channel from UE.

For example, the above-described operation that LTE in S1630/S1635 (200/100 in FIG. 17) performs DL channel reception or UL channel transmission with a base station (100/200 in FIG. 17) may be implemented by a device in FIG. 17 to be described below. For example, in reference to FIG. 17, at least one processor 102 may control at least one transceiver 106 and/or at least one memory 104, etc. to perform DL channel reception or LTL channel transmission, and at least one transceiver 106 may receive a DL channel from a base station or transmit a LTL channel to a base station.

When LTE receives a DL channel from a base station S 1630, a base station may receive a DL HARQ-ACK feedback from LTE S1640. In other words, LTE may transmit a HARQ-ACK feedback to a base station.

For example, a HARQ-ACK feedback may be enabled/disabled. For example, when a HARQ-ACK feedback is enabled, the HARQ-ACK feedback may be transmitted/received. For example, the HARQ-ACK feedback may include ACK/NACK information for a DL channel/DL data transmitted from a base station. For example, the HARQ-ACK feedback may be transmitted through a PUCCH and/or a PUSCH. For example, a HARQ-ACK codebook (e.g., type 1/2/3) may be configured.

For example, a timing for the HARQ-ACK feedback transmission may be determined based on examples of the present disclosure (e.g., Embodiment 1, 2, 3, 4 and a combination of at least one of examples described in detailed embodiments thereof). For example, a HARQ-ACK feedback in S 1640 may be transmitted through a PUCCH/a PUSCH in a time unit after a predetermined time offset (i.e., K1) from a time unit receiving a PDSCH including UL data in S1630. This K1 offset may have a value in an extended range (e.g., 0-31). A method of configuring/indicating such K1 (or a base K1 offset and an additional K1 offset) is the same as described in examples of the present disclosure (e.g., Embodiment 1, 2, 3, 4 and a combination of at least one of examples described in detailed embodiments thereof).

For example, the above-described operation that a base station in S 1640 (100/200 in FIG. 17) receives the HARQ-ACK feedback from UE (200/100 in FIG. 17) may be implemented by a device in FIG. 17 to be described below. For example, in reference to FIG. 17, at least one processor 102 may control at least one transceiver 106 and/or at least one memory 104, etc. to receive the HARQ-ACK feedback, and at least one transceiver 106 may receive the HARQ-ACK feedback from LTE.

For example, the above-described operation that UE in S 1640 (200/100 in FIG. 17) transmits the HARQ-ACK feedback to a base station (100/200 in FIG. 17) may be implemented by a device in FIG. 17 to be described below. For example, in reference to FIG. 17, at least one processor 102 may control at least one transceiver 106 and/or at least one memory 104, etc. to transmit the HARQ-ACK feedback, and at least one transceiver 106 may transmit the HARQ-ACK feedback to a base station.

As described above, the above-described base station/terminal signaling and operation (e.g., embodiment 1/2/3/4, FIG. 14/15/16, etc.) may be implemented by a device to be described below (e.g., 100/200 in FIG. 17). For example, a BS may correspond to a first wireless device and UE may correspond to a second wireless device, and in some cases, the opposite case may be considered.

For example, the above-described base station/terminal signaling and operations (e.g., embodiment 1/2/3/4, FIG. 14/15/16, etc.) may be processed by at least one processor (102/202) in FIG. 17, and the above-described base station/terminal signaling and operation (e.g., embodiment 1/2/3/4, FIG. 14/15/16, etc.) may be stored in a memory (e.g., at least one memory (104/204) in FIG. 17) in a form of a command/a program (e.g., an instruction, an executable code) for driving at least one processor (e.g., 102/202) in FIG. 17.

General Device to which the Present Disclosure may be applied

FIG. 17 illustrates a block diagram of a wireless communication device according to an embodiment of the present disclosure.

In reference to FIG. 17, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB 1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing uplink transmission by a terminal in a wireless communication system, the method comprising:

   receiving a timing offset related to uplink transmission from a base station through system information;
   receiving a downlink channel from the base station in a first time unit; and
   transmitting an uplink channel to the base station in a second time unit,
   wherein a number of time units between the first time unit and the second time unit is based on a first time offset or a second time offset,
   wherein the first time offset is based on base offset information and additional offset information and the second time offset is based on base offset information,
   wherein the base offset information is acquired through downlink control information (DCI) related to the downlink channel, and
   wherein a size of a field indicating the base offset in the DCI is the same for the first time offset and the second time offset.

2. The method according to claim 1, wherein:
   the additional offset information is signaled through the system information.

3. The method according to claim 2, wherein:
   the additional offset information corresponds to a multiple value or corresponds to a minimum value of candidates of the first time offset.

4. The method according to claim 1, wherein:
   the additional offset information is indicated through at least one of radio resource control (RRC) signaling, medium access control (MAC) control element (CE) or the DCI.

5. The method according to claim 4, wherein:

   at least one candidate value of the additional offset is configured,
   one additional offset value of the at least one candidate value is indicated.

6. The method according to claim 1, wherein:
   at least one candidate value of the additional offset information or a plurality of sets for the candidate value of the additional offset is signaled through the system information.

7. The method according to claim 1, wherein:
   the additional offset information is acquired based on at least one of a slot index, a system frame number (SFN), a control channel element (CCE) index of a physical downlink control channel (PDCCH) carrying the DCI and an index related to the uplink channel.

8. The method according to claim 1, wherein:

   the downlink channel is a physical downlink shared channel (PDSCH) and the uplink channel is a physical uplink control channel (PUCCH) or a physical uplink shared channel (PUSCH),
   the base offset information corresponds to K1 indicated by a timing indicator field from the PDSCH of the DCI to a HARQ feedback.

9. The method according to claim 8, wherein:
   the second time offset has a value in a range of 0 to 15 and the first time offset has the value in the range greater than the second time offset.

10. The method according to claim 8, wherein:
    for DCI format 1_0, the second time offset has a value in a range of 1 to 8 and the first time offset has the value in the range greater than the second time offset.

11. The method according to claim 1, wherein:

the downlink channel is a PDCCH and the uplink channel is a PUSCH,
the base offset information corresponds to K2 indicated by a time domain resource allocation (TDRA) field of the DCI.

12. The method according to claim 10, wherein:
the second time offset has the value in the range of 0 to 32 and the first time offset has the value in the range greater than the second time offset.

13. The method according to claim 10, wherein:
when default PUSCH time domain resource allocation is applied, for subcarrier spacing configuration index ($\mu$) 0, 1, 2, and 3, the second time offset has the value in the range of 1 to 6 and the first time offset has the value in the range greater than the second time offset.

14. The method according to claim 1, wherein:
a unit size of the time unit is a slot.

15. The method according to claim 1, wherein:

the timing offset related to the uplink transmission includes $K_{offset}$,
the system information further includes ephemeris for a serving satellite.

16. The method according to claim 1, wherein:
the wireless communication system is a system supporting a non-terrestrial network (NTN) service.

17. A terminal for performing uplink transmission in a wireless communication system, the terminal comprising:

at least one transceiver; and
at least one processor connected to the at least one transceiver,
wherein the at least one processor is configured to:
receive through the at least one transceiver a timing offset related to uplink transmission from a base station through system information;
receive a downlink channel through the at least one transceiver from the base station in a first time unit; and
transmit an uplink channel through the at least one transceiver to the base station in a second time unit,
wherein a number of time units between the first time unit and the second time unit is based on a first time offset or a second time offset,
wherein the first time offset is based on base offset information and additional offset information and the second time offset is based on base offset information,
wherein the base offset information is acquired through downlink control information (DCI) related to the downlink channel, and
wherein a size of a field indicating the base offset in the DCI is the same for the first time offset and the second time offset.

18. A method of receiving uplink transmission by a base station in a wireless communication system, the method comprising:

transmitting a timing offset related to uplink transmission to at least one terminal through system information;
transmitting a downlink channel to the terminal in a first time unit; and
receiving an uplink channel from the terminal in a second time unit,
wherein a number of time units between the first time unit and the second time unit is based on a first time offset or a second time offset,
wherein the first time offset is based on base offset information and additional offset information and the second time offset is based on base offset information,
wherein the base offset information is acquired through downlink control information (DCI) related to the downlink channel, and
wherein a size of a field indicating the base offset in the DCI is the same for the first time offset and the second time offset.

19. A base station for receiving uplink transmission in a wireless communication system, the base station comprising:

at least one transceiver; and
at least one processor connected to the at least one transceiver,
wherein the at least one processor is configured to:

transmit through the at least one transceiver a timing offset related to uplink transmission to at least one terminal through system information;
transmit a downlink channel through the at least one transceiver to a terminal in a first time unit; and
receive an uplink channel through the at least one transceiver from the terminal in a second time unit,
wherein a number of time units between the first time unit and the second time unit is based on a first time offset or a second time offset,
wherein the first time offset is based on base offset information and additional offset information and the second time offset is based on base offset information,
wherein the base offset information is acquired through downlink control information (DCI) related to the downlink channel, and
wherein a size of a field indicating the base offset in the DCI is the same for the first time offset and the second time offset.

20. A processing unit configured to control a terminal to perform uplink transmission in a wireless communication system, the processing unit comprising:

at least one processor; and
at least one computer memory which is operably connected to the at least one processor and stores instructions performing operations based on being executed by the at least one processor,
wherein the operations include:

receiving a timing offset related to uplink transmission from a base station through system information;
receiving a downlink channel from the base station in a first time unit; and
transmitting an uplink channel to the base station in a second time unit,
wherein a number of time units between the first time unit and the second time unit is based on a first time offset or a second time offset,
wherein the first time offset is based on base offset information and additional offset information and the second time offset is based on base offset information,
wherein the base offset information is acquired through downlink control information (DCI) related to the downlink channel, and
wherein a size of a field indicating the base offset in the DCI is the same for the first time offset and the second time offset.

21. At least one non-transitory computer readable medium storing at least one instruction, wherein:
the at least one instruction controls a device which performs uplink transmission in a wireless communication system by being executed by at least one processor to:

receive a timing offset related to uplink transmission from a base station through system information;
receive a downlink channel from the base station in a first time unit; and
transmit an uplink channel to the base station in a second time unit,
wherein a number of time units between the first time unit and the second time unit is based on a first time offset or a second time offset,
wherein the first time offset is based on base offset information and additional offset information and the second time offset is based on base offset information,
wherein the base offset information is acquired through downlink control information (DCI) related to the downlink channel, and
wherein a size of a field indicating the base offset in the DCI is the same for the first time offset and the second time offset.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends on subcarrier spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

FIG.3

One Subframe

$14 \cdot 2^\mu$ OFDM Symbol

$k = N_{RB}^\mu N_{SC}^{RB} - 1$

$N_{RB}^\mu N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^\mu - 1$

# FIG.4

# FIG.5

FIG.6

INITIAL CELL SEARCH — PSS/SSS& [DLRS]& PBCH — S601

SYSTEM INFORMATION RECEPTION — PDCCH/ PDSCH (BCCH) — S602

RANDOM ACCESS PROCEDURE — PRACH (S603) — PDCCH/ PDSCH (S604) — PUSCH (S605) — PDCCH/ PDSCH (S606)

GENERAL DL/UL Tx/Rx — PDCCH/ PDSCH (S607) — PUSCH/ PUCCH (S608)

· DL/UL ACK/NACK
· UE CQI/PMI RI REPORT
   USING PUSCH AND PUCCH

# FIG. 7

DL assingment-to-PDSCH offset(K0)

PDCCH

slot

PDSCH

PUCCH

PDSCH-to-HARQ-ACK reporting offset(K1)

(a)

UL grant-to-PUSCH offset(K2)

PDCCH

PUSCH

(b)

# FIG.8

Field of view of the satellite(or UAS platform)

(a)

Field of view of the satellite(or UAS platform)

(b)

# FIG.9

- Common TA(Tcom) = 2*D$_0$/c
- UE specific differential TA for xth UE (T$_{UEx}$) = 2*(D$_{1x}$-D$_0$)/c
- Full TA(Tfull) = Tcom + T$_{UEx}$

(a) Regenerative payload

- Common TA(Tcom) = 2*(D$_{01}$+D$_{02}$)/c
- UE specific differential TA for xth UE (T$_{UEx}$) = 2*(D$_{1x}$-D$_{01}$)/c
- Full TA(Tfull) = Tcom + T$_{UEx}$

(b)Transparent payload

FIG.10

# FIG.11

DCI scheduling PUSCH

gNB DL | n | | | | ··· | ··· | | | | | | | | | | ··· |

$K_2 + K_{offset}$

$m = n + K_2 + K_{offset}$

gNB UL | n | | | ··· | ··· | | | | | m | | ··· |

UE DL | n | | | | ··· | | | | | | | ··· |

UE UL | n | | | ··· | | | | | m | | | ··· |

TA

PUSCH at $m = n + K_2 + K_{offset}$

$K_2 + K_{offset}$

# FIG.12

PUCCH with HARQ-ACK
acknowledging the MAC CE
Command

UL Command activated

$m= n+3N_{slot}^{subframe,\mu} +1$

DL Command activated

$p= n+3N_{slot}^{subframe,\mu} +k_{mac}+1$

## FIG.13

Downlink radio frame n

Uplink radio frame n

$T_{TA} = (N_{TA} + N_{TA,offset} + N_{TA,adj}^{common} + N_{TA,adj}^{UE}) \times T_C$

UE timing

FIG. 14

| | |
|---|---|
| Receive NTN-related system information | S1410 |

↓

| | |
|---|---|
| Receive downlink channel in first time unit | S1420 |

↓

| | |
|---|---|
| Transmit uplink channel in second time unit determined based on first time offset or second time offset from first time unit | S1430 |

# FIG. 15

| Transmit NTN-related system information | S1510 |
|---|---|

↓

| Transmit downlink channel in first time unit | S1520 |
|---|---|

↓

| Receive uplink channel in second time unit determined based on first time offset or second time offset from first time unit | S1530 |
|---|---|

FIG.16

BS                                                    UE

Configuration Information                      S1610

Control Information                            S1620

                                               S1625

DL channel                                     S1630

UL channel                                     S1635

DL HARQ-ACK                                    S1640

FIG.17

Second Device 200

Transceiver(s) 206

Processor(s) 202

Memory(s) 204

208

First Device 100

Processor(s) 102

Memory(s) 104

Transceiver(s) 106

108

## INTERNATIONAL SEARCH REPORT

| International application No. |
|---|
| **PCT/KR2022/004717** |

**A.     CLASSIFICATION OF SUBJECT MATTER**

**H04W 72/04**(2009.01)i; **H04L 1/18**(2006.01)i; **H04W 84/06**(2009.01)i; **H04B 7/185**(2006.01)i

According to International Patent Classification (IPC) or to both national classification and IPC

**B.     FIELDS SEARCHED**

Minimum documentation searched (classification system followed by classification symbols)

H04W 72/04(2009.01); H04L 5/16(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이밍 오프셋(timing offset), 시스템 정보(system information), Koffset, K1/K2, 지시자 필드(indication field), 하향링크 제어 정보(downlink control information), 슬롯(slot), 비-지상 네트워크(non-terrestrial network, NTN)

**C.     DOCUMENTS CONSIDERED TO BE RELEVANT**

| Category* | Citation of document, with indication, where appropriate, of the relevant passages | Relevant to claim No. |
|---|---|---|
| X | CMCC. Discussion on timing relationship enhancements for NTN. R1-2101042, 3GPP TSG RAN WG1 #104-e, e-Meeting. 18 January 2021.<br>        See sections 2.1-5.1; and figure 2. | 1-21 |
| A | NTT DOCOMO, INC. Discussion on timing relationship enhancements for NTN. R1-2101616, 3GPP TSG RAN WG1 #104e, e-Meeting. 19 January 2021.<br>        See sections 2-3. | 1-21 |
| A | ERICSSON. Feature lead summary#3 on timing relationship enhancements. R1-2102019, 3GPP TSG-RAN WG1 Meeting #104-e, e-Meeting. 03 February 2021.<br>        See sections 8-9.3. | 1-21 |
| A | US 2021-0058911 A1 (HUAWEI TECHNOLOGIES CO., LTD.) 25 February 2021 (2021-02-25)<br>        See paragraphs [0179]-[0203]; and figure 1. | 1-21 |
| A | US 2017-0127403 A1 (LINK LABS, LLC) 04 May 2017 (2017-05-04)<br>        See paragraphs [0057]-[0078]; and figure 3. | 1-21 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 July 2022** | **14 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/004717**

| Patent document cited in search report | | | Publication date (day/month/year) | Patent family member(s) | | | Publication date (day/month/year) |
|---|---|---|---|---|---|---|---|
| US | 2021-0058911 | A1 | 25 February 2021 | CN | 106060948 | A | 26 October 2016 |
| | | | | CN | 106060948 | B | 07 September 2018 |
| | | | | CN | 107079471 | A | 18 August 2017 |
| | | | | CN | 107079471 | B | 25 August 2020 |
| | | | | CN | 109348526 | A | 15 February 2019 |
| | | | | CN | 109348526 | B | 22 October 2021 |
| | | | | CN | 112073943 | A | 11 December 2020 |
| | | | | EP | 3200542 | A1 | 02 August 2017 |
| | | | | EP | 3200542 | B1 | 15 May 2019 |
| | | | | EP | 3609273 | A1 | 12 February 2020 |
| | | | | EP | 3609273 | B1 | 27 October 2021 |
| | | | | EP | 3609274 | A1 | 12 February 2020 |
| | | | | EP | 3609274 | B1 | 27 October 2021 |
| | | | | EP | 4002949 | A1 | 25 May 2022 |
| | | | | US | 10834714 | B2 | 10 November 2020 |
| | | | | US | 2017-0325205 | A1 | 09 November 2017 |
| | | | | WO | 2016-165070 | A1 | 20 October 2016 |
| | | | | WO | 2016-165515 | A1 | 20 October 2016 |
| US | 2017-0127403 | A1 | 04 May 2017 | US | 9860882 | B2 | 02 January 2018 |

Form PCT/ISA/210 (patent family annex) (July 2019)